# EUROPEAN PATENT SPECIFICATION

(11) **EP 3 167 296 B1**
(45) Date of publication and mention of the grant of the patent: **27.03.2019**
(21) Application number: 15819654.3
(22) Date of filing: 08.07.2015
(51) Int. Cl.: H04W 24/08, H04W 4/00, H04W 84/18, H04L 12/24

(54) **FAULT DIAGNOSIS BASED ON CONNECTION MONITORING**
FEHLERDIAGNOSE AUF BASIS VON VERBINDUNGSÜBERWACHUNG
DIAGNOSTIC DE DÉFAILLANCE BASÉ SUR LA SURVEILLANCE DE CONNEXION

(30) Priority: 09.07.2014 US 201462022585 P
(43) Date of publication of application: 17.05.2017
(73) Proprietor: Leeo, Inc., Palo Alto, California 94303 (US)
(72) Inventor: STEVENS, Andrew G., Palo Alto, California 94303 (US); HOVLAND, Bjorn, Palo Alto, California 94306 (US); JOSHI, Nina S., Saratoga, California 95070 (US); NGUYEN, Jane L., San Jose, California 95134 (US)
(74) Representative: J A Kemp
(86) International application number: PCT/US2015/039622
(87) International publication number: WO 2016/007680

(56) References cited:
- WO-A2-2013/072926
- US-A1- 2010 228 819
- US-A1- 2012 166 610
- US-A1- 2012 166 642
- US-A1- 2013 013 967
- US-A1- 2013 053 023
- US-A1- 2014 122 140
- US-B1- 6 892 317
- US-B1- 6 892 317

## Description

### BACKGROUND

### Field

The described embodiments relate generally to a system that includes multiple environmental monitoring devices, and more specifically to techniques for determining types of problems in the system by monitoring communication within the system and with external client devices.

### Related Art

Trends in connectivity and in portable electronic devices are resulting in dramatic changes in people's lives. For example, the Internet now allows individuals access to vast amounts of information, as well as the ability to identify and interact with individuals, organizations and companies around the world. This has resulted in a significant increase in online financial transactions (which are sometimes referred to as 'ecommerce'). Similarly, the increasingly powerful computing and communication capabilities of portable electronic device (such as smartphones), as well as a large and growing set of applications, are accelerating these changes, providing individuals access to information at arbitrary locations and the ability to leverage this information to perform a wide variety of tasks.

Recently, it has been proposed these capabilities be included in other electronic devices that are located throughout our environments, including those that people interact with infrequently. In the so-called 'Internet of things,' it has been proposed that future versions of these so-called 'background' electronic devices be outfitted with more powerful computing capabilities and networking subsystems to facilitate wired or wireless communication. For example, the background electronic devices may include: a cellular network interface (*LTE*, etc.), a wireless local area network interface (*e*.*g*., a wireless network such as described in the Institute of Electrical and Electronics Engineers (*IEEE*) 802.11 standard or Bluetooth™ from the Bluetooth Special Interest Group of Kirkland, Washington), and/or another type of wireless interface (such as a near- field-communication interface). These capabilities may allow the background electronic devices to be integrated into information networks, thereby further transforming people's lives.

The resulting system, which may include multiple electronic devices, may be distributed across multiple locations and environments. In addition, communication within and by such a system may involve multiple subsystems or components, as well as multiple service providers. The complexity of the system may make it susceptible to a variety of different types of problems, fault conditions or failure mechanisms (which are henceforth referred to as 'types of problems').

However, the complexity of the system may make it difficult to accurately and promptly diagnose a particular type of fault. These delays or difficulties may result in service disruptions, which are frustrating to customers. In addition, in the absence of a proper diagnosis of a particular type of problem, customers may incorrectly blame a provider of the system, even when the problem has a different origin. Consequently, the difficulty in diagnosing the type of problem can adversely impact customer satisfaction.

Hence, there is a need for a system that addresses the above-described problems.

US Patent Application 2012/166610 A1 by Doh Yoon Mee et al., entitled "Method and System for Communication in Application Field," discloses communication techniques among sensor nodes, actor nodes and user devices. Moreover, US Patent Application 2013/053023 A1 by Meredith Sheldon et al., entitled "Ticketing Mobile Call Failures Based on Geolocated Event Data," discloses techniques for the determination of error causes based on link failures.

### SUMMARY

According to a first aspect of the invention, there is provided a system as set out in claim 1.

According to a second aspect of the invention, there is provided a computer-program product as set out in claim 14.

According to a third aspect of the invention, there is provided a method as set out in claim 15.

The described embodiments relate to a system that includes environmental monitoring devices that monitor and communicate information about environmental conditions in external environments that include the environmental monitoring devices. Moreover, the system includes a data subsystem that: receives the information from the environmental monitoring devices; associates the information with user accounts; stores the information; and interacts with a client subsystem via a network. Furthermore, the client subsystem: receives the information from the environmental monitoring devices; interacts with the data subsystem and client devices via the network; and provides user-account information. This system may detect disruptions in connections that convey information during the communication and the interactions among the environmental monitoring devices, the data subsystem, the client subsystem and the client devices to determine a type of problem in the system.

Note that portions of the network may be associated with different service providers.

Moreover, the system may determine the type of problem based on whether: a connection is disrupted at a location that includes one device in the system, a first set of connections are disrupted in a region that includes multiple devices in the system, and/or a second set of connection are disrupted throughout the system.

In particular, the type of problem may involve disruption of connections among: the environmental monitoring devices and the data subsystem, the environmental monitoring devices and the client subsystem, the environmental monitoring devices and the client devices, the client devices and the data subsystem, and/or the client devices and the client subsystem. Then, the system may determine that the type of problem includes a power failure when all the connections are disrupted in a region that includes multiple devices in the system. Alternatively, the system may determine that the type of problem includes a communication failure associated with one or more of the services providers when a majority of the connections are disrupted in more than one region in the system.

In some embodiments, the system determines that the type of problem includes a problem at a location in the system when the disrupted connections are associated with a user. For example, the local problem may include: a power disruption at the location, a network-connection problem at the location, and/or a router problem at the location. Thus, if the type of problem involves disruption of connections among the environmental monitoring devices and the client devices, the system may determine that the type of problem includes the router problem at the location in the system that is associated with the user. Moreover, if the type of problem involves disruption of connections among a client device and the environmental monitoring devices, the system may determine that the type of problem includes the power disruption at the location in the system.

Furthermore, if the type of problem involves disruption of connections with the environmental monitoring devices at different locations, having a common characteristic, in the system, the system may determine that the type of problem includes a failure mode of the environmental monitoring devices. For example, the common characteristic may include: a geographic condition at the locations, a position of the environmental monitoring devices within the locations, and/or duration of ownership of the environmental monitoring devices.

Additionally, the environmental monitoring devices may communicate the information to a storage subsystem. This storage subsystem may be associated with a third party that is other than a provider of the environmental monitoring devices, the data subsystem and the client subsystem. Then, if the type of problem involves disruption of connections among the environmental monitoring devices and the storage subsystem, the system may determine that the type of problem includes: a failure mode of the environmental monitoring devices, the storage subsystem is full, the storage subsystem is suffering a device failure, the storage subsystem is offline, and/or a network-connection problem with the storage subsystem (such as a problem with an interface circuit). Alternatively, if the type of problem involves disruption of a connection between the data subsystem and the client subsystem, the system may determine that the type of problem includes: a problem at a data center that stores the information and/or a problem with a database.

Moreover, if the type of problem involves disruption of a connection between the client, subsystem and the environmental monitoring devices, the system may determine that the type of problem includes a problem with the network. Alternatively, if the type of problem involves disruption of a connection between the client, subsystem and the client devices, the system may determine that the type of problem includes: a power failure, a problem with the network, and/or a problem with the client subsystem. Furthermore, if the type of problem involves disruption of a connection between a client device and the environmental monitoring devices, the system may determine that the type of problem includes: a power failure and/or a problem with the network. Additionally, if the type of problem involves disruption of a connection between the data subsystem and one of the environmental monitoring devices, the system may determine that the type of problem includes: a power fai lure, corrupted data, and/or a problem with the network.

Another embodiment provides a computer-program product for use in conjunction with the system. This computer-program product may include instructions for at least some of the aforementioned operations performed by the system.

Another embodiment provides a method for determining a type of problem in a system. During operation, the system monitors communication within the system and with client devices, where the system includes environmental monitoring devices, a data subsystem, and a client subsystem, and where the environmental monitoring devices monitor and communicate information about environmental conditions in external environments that include the environmental monitoring devices. Then, the system determines the type of problem in the system based on disruptions in connections that convey information during the communication within the system and with the client devices.

### BRIEF DESCRIPTION OF THE FIGURES

FIG. 1 is a block diagram illustrating a system in accordance with an embodiment of the present disclosure.
FIG. 2 is a flow diagram illustrating a method for determining a type of problem in the system of FIG. 1 in accordance with an embodiment of the present disclosure.
FIG. 3 is a block diagram illustrating communication within the system of FIG. 1 in accordance with an embodiment of the present disclosure.
FIG. 4 is a block diagram illustrating an environmental monitoring device in the system of FIG. 1 in accordance with an embodiment of the present disclosure.
FIG. 5 is a block diagram illustrating a data structure with sensor data in the environmental monitoring device of FIG. 4 in accordance with an embodiment of the present disclosure.
FIG. 6 is a block diagram illustrating an electronic device in the system of FIG. 1 in accordance with an embodiment of the present disclosure.
FIG. 7 is a block diagram illustrating a data structure with a historical record in the electronic device of FIG. 6 in accordance with an embodiment of the present disclosure.

Note that like reference numerals refer to corresponding parts throughout the drawings. Moreover, multiple instances of the same part are designated by a common prefix separated from an instance number by a dash.

### DETAILED DESCRIPTION

A system that determines types of problems by monitoring connection disruptions and/or available connections is described. During operation, the system monitors communication within the system and with client devices, where the system includes environmental monitoring devices, a data subsystem, and a client subsystem, and where the environmental monitoring devices monitor and communicate information about environmental conditions in external environments that include the environmental monitoring devices. Then, the system determines the type of problem in the system based on the disruptions in connections and/or the available connections that convey information during the communication within the system and with the client devices.

By accurately and promptly determining the type of problem, the system may facilitate repairs and/or pre-emptive action to prevent future problems. Consequently, this diagnostic technique may reduce downtime and/or may improve the performance of the system. Furthermore, the determined type of problem can be communicated to users of the system, thereby improving their understanding of the origin of the type of problem and the appropriate remedial action that is needed to correct it. This improvement in the situational awareness of the users may improve their satisfaction with the provider of the environmental monitoring devices and/or the system. Therefore, the diagnostic technique may improve customer retention and, thus, the revenue and profitability of the provider. In addition, the diagnostic technique may improve data quality or integrity. For example, the data quality of a historical record of the environmental condition(s) in one or more environments may be maintained by determining when a disruption in the monitoring of the one or more environmental conditions is due to an unintentional or an unavoidable act (such as a power failure).

Communication between electronic devices (such as the environmental monitoring devices, the data subsystem, the client subsystem, an optional storage subsystem, and/or the client devices) may utilize wired, optical and/or wireless communication. For example, the wireless communication may involve communicating packets or frames that are transmitted and received by radios in the electronic devices in accordance with a communication protocol, such as: Bluetooth™ (from the Bluetooth Special Interest Group of Kirkland, Washington), an Institute of Electrical and Electronics Engineers (*IEEE*) 802.15 standard (such as ZigBee® from the ZigBee® Alliance of San Ramon, California), an Institute of Electrical and Electronics Engineers (*IEEE*) 802.11 standard, Z-Wave, a power-line communication standard, an infra-red communication standard, a universal serial bus (*USB*) communication standard, a near-field-communication standard or specification (from the NFC Forum of Wakefield, Massachusetts), another wireless ad-hoc network standard, and/or another type of wireless interface. In some embodiments, the communication protocol may be compatible with a 2^{nd} generation or mobile telecommunication technology, a 3^{rd} generation of mobile telecommunications technology (such as a communication protocol that complies with the International Mobile Telecommunications-2000 specifications by the International Telecommunication Union of Geneva, Switzerland), a 4^{th} generation of mobile telecommunications technology (such as a communication protocol that complies with the International Mobile Telecommunications Advanced specification by the International Telecommunication Union of Geneva, Switzerland), and/or another cellular-telephone communication technique. For example, the communication protocol may include Long Term Evolution or *LTE*. In the discussion that follows, ZigBee® is used as an illustrative example of the communication protocol used during communication among the environmental monitoring devices, while communication in a remainder of the system may involve a different communication protocol (such as a wireless communication protocol and/or an Internet communication protocol). In addition, the communication may occur via a wide variety of frequency bands, including frequencies associated with the so-called 'white space' in frequencies bands associated with analog television broadcasting.

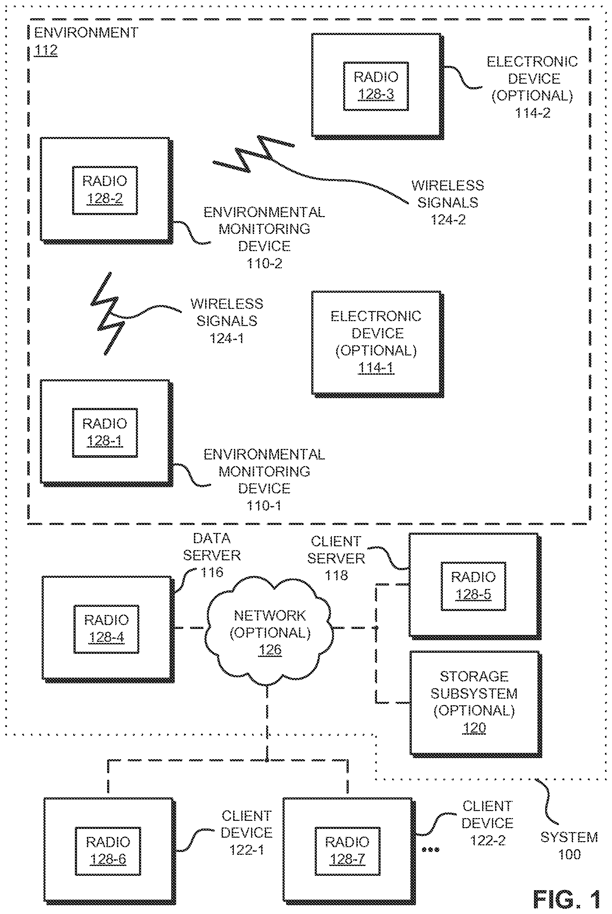

The communication between the electronic devices is shown in FIG. 1, which presents a block diagram illustrating a system 100. In particular, system 1 00 includes: environmental monitoring devices 110, optional electronic devices 114 (such so-called legacy electronic devices' that may or may not have communication capability), a data subsystem (such as data server 116), a client subsystem (such as client server 118), and/or an optional storage subsystem 120 (such as distributed-storage subsystem that includes one or more servers). In addition, as shown in FIG. 1, there may be communication between system 100 and one or more client devices 122 (such as cellular telephones and computers used by users of system 100). Note that these components in FIG. 1 are sometimes collectively referred to as 'electronic devices.' Moreover, communication with environmental monitoring devices 110 may involve wireless signals 124, and communication in remainder of system 100 may occur via network 126 (which may include the Internet, a wireless local area network, an Ethernet network, an intra-net, an optical network, etc., and, in general, may be associated with one or more service providers). This communication or interaction among the electronic devices in system 100 may involve communication 'connections' (or links) between the electronic devices. However, in this regard 'connection' is used as a general term indicating that information is communicated between at least two of the electronic devices in system 100. Thus, the wireless communication with environmental monitoring devices 100 may or may not require that a wireless connection be established in system 100. Therefore, the wireless communication in system 100 may or may not occur via a wireless network,

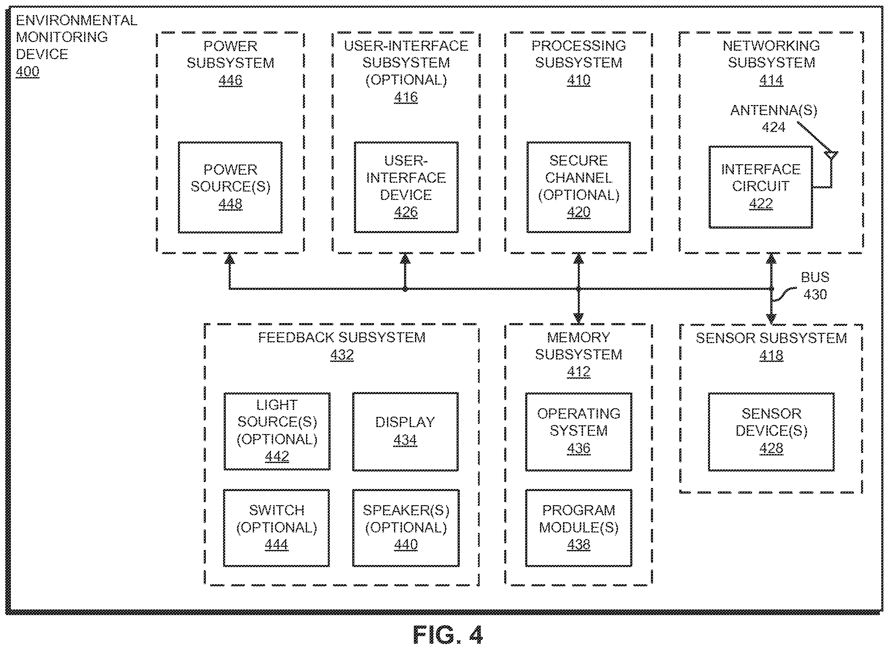

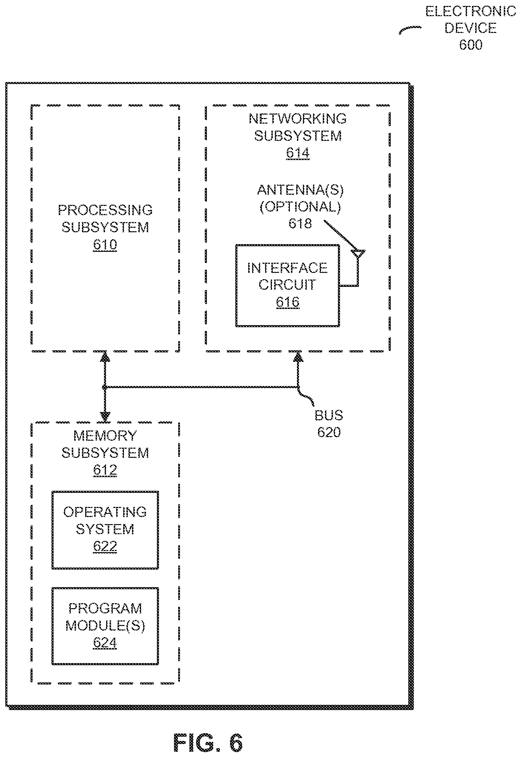

In some embodiments, the communication or interaction among the electronic devices in system 100 involves the exchange of packets. These packets may be included in frames in one or more wireless channels. Moreover, as described further below with references to FIGs. 4 and 6, the electronic devices in system 100 may include subsystems, such as: a networking subsystem, a memory subsystem, a processing subsystem, an optional user-interface subsystem, and a sensor subsystem. In addition, these electronic devices may include radios 128 in the networking subsystems. More generally, environmental monitoring devices 110, data server 116, client server 118, optional storage subsystem 120, client devices 122 and/or optionally some of optional electronic devices 114 can include (or can be included within) any electronic devices with networking subsystems that enable wirelessly communication with another electronic device. This can comprise transmitting frames on wireless channels to enable the electronic devices to make initial contact, followed by exchanging subsequent data/management frames (such as connect requests or petitions to establish a connection or link), configuring security options (*e.g*., encryption on a link or in a mesh network), transmitting and receiving packets or frames, etc.

As can be seen in FIG. 1, wireless signals 124 (represented by a jagged line) are transmitted from/received by radios 128 in environmental monitoring devices 110, data server 116, client server 118, optional storage subsystem 120, client devices 122 and/or optionally some of optional electronic devices 114. Furthermore, the processing of a packet or frame in an electronic device in system 100 (such as environmental monitoring device 110-1) may include: receiving wireless signals 124 with the packet or frame; decoding/extracting the packet or frame from received wireless signals 124 to acquire the packet or frame; and processing the packet or frame to determine information contained in the packet or frame (such as information specifying a location, region or environment of the transmitting environmental monitoring device in system 100).

In system 100, environmental monitoring devices 110 may monitor environmental conditions in one or more environments (such as environment 112), which are sometimes referred to as 'external environments.' These environments may include: a portion of a building, the building, a container or a package, a vehicle, a liquid, and/or a train car. (Note that one or more of environmental monitoring devices 110 may be immersed in a liquid, and environment 112 may be at a fixed location or time-varying locations.) For example, at least some of environmental monitoring devices 110 may include sensors that provide sensor data that reflect the environmental conditions in environment 112. In general, the sensor data may be provided without or excluding interaction (such as communication and/or electrical coupling) between environmental monitoring devices 110 and optional electronic devices 114. Thus, sensors in environmental monitoring devices 110 may indirectly infer information about the operation and/or the performance of optional electronic devices 114 based on the monitored environmental conditions. However, in some embodiments at least some of environmental monitoring devices 110 interact directly with at least some of optional electronic devices 114 (via communication or electrical coupling), thereby facilitating direct measurement of the sensor data, as well as feedback control of these electronic devices by at least some of environmental monitoring devices 110. In some embodiments, one or more of environmental monitoring devices 110 is integrated into one or more other electronic device, such as one or more of optional electronic devices 114.

The sensor data may be analyzed locally by at least one of environmental monitoring devices 110 and/or remotely by data server 116. Moreover, the sensor data and/or the analyzed sensor data may be communicated among environmental monitoring devices 110. In particular, environmental monitoring devices 110 may form a ZigBee® mesh network, with ZigBee® end devices communicating with a ZigBee® coordinator (such as environmental monitoring device 110-1) via one or more optional ZigBee® routers. Then, environmental monitoring device 110-1 may communicate (wirelessly and/or via data server 116, client server 118 and network 126) the sensor data and/or the analyzed sensor data to data server 116. In addition, the sensor data and/or the analyzed sensor data (as well as alerts or other information about the environmental conditions in the one or more environments) may be communicated or shared with client devices 122 (*e*.*g*., a cellular telephone or a portable electronic device, a tablet, a laptop computer, a desktop computer, etc.), optional storage subsystem 120, and/or remote servers or computers not shown in FIG. 1. For example, the sensor data and/or the analyzed sensor data may be communicated to client devices 122 by at least some of environmental monitoring devices 110, such as the one or more optional ZigBee® routers and/or the ZigBee® coordinator. (Thus, at least some of environmental monitoring devices 110 may function as sensor-data hubs for other environmental monitoring devices 110.) Alternatively, the sensor data, the analyzed sensor data and/or operational information (such as remaining battery life or a maintenance notification) about at least some of environmental monitoring devices 110 or optional electronic devices 114 may be communicated to client devices 122 by data server 116, via client server 118, using wired, optical and/or wireless communication. A given one of client devices 122 may display or provide this information to a user. In some embodiments, this client device compares the information from multiple environmental monitoring devices 110 to ensure consistency before presenting the information to the user. This may reduce the likelihood of false alarms or misinformation. Alternatively, the client device can present comparisons of the information from multiple environmental monitoring devices 110.

In addition to optionally analyzing the sensor data, data server 116 may associate the sensor data and/or the analyzed sensor data with user accounts based on user-account information, and may store the sensor data and/or the analyzed sensor data. In some embodiments, data server 116 optionally supplements the sensor data using additional resources via network 126 (such as repositories of weather, earthquake, tsunami and/or allergen information on computers and servers not shown in FIG. 1). Moreover, the user-account information may be maintained and, on request, provided by client server 118. Furthermore, as shown in FIG. 1, optional storage subsystem 120 (which may be operated by or on behalf of a third party that is other than a provider of environmental monitoring devices 110 and/or system 100) may receive (from electronic devices in system 100) and store at least some of the sensor data and/or the analyzed sensor data (such as audio or video collected by one or more of environmental monitoring devices 110).

In general, the sensor data and/or the analyzed sensor data that is communicated and/or stored in system 100 may be protected. For example, the sensor data may be encrypted (such as by applying a symmetric or an asymmetric encryption key associated with one of environmental monitoring devices 110 and/or a secure channel in a processor in one of environmental monitoring devices 110), digitally signed and/or securely hashed (such as by applying a one-way cryptographic hash function, *e*.*g*., SHA-256) by environmental monitoring devices 110. Furthermore, data server 116 may store the sensor data and/or the analyzed sensor data in secure, certified historical records or logs of the environmental conditions in the one or more environments. However, in some embodiments, users of environmental monitoring devices 110, who, in general, control how their data is used and shared, may (via client devices 122) instruct environmental monitoring devices 110 to provide, via the mesh network, information that allows data server 116, client server 118 and/or optional storage subsystem 120 to unprotect the sensor data and/or the analyzed sensor data. Similarly, in response to requests from authorized recipients for the sensor data and/or the analyzed sensor data (such as a request from one of client devices 122), data server 116, client server 118 and/or optional storage subsystem 120 may provide access to the stored sensor data and/or the analyzed sensor data. If the sensor data and/or the analyzed sensor data are protected, the associated environmental monitoring devices 110 may provide protection information to the client device that allows the client device to unprotect the sensor data and/or the analyzed sensor data.

Environmental monitoring devices 110 may allow a variety of services to be offered to: users associated with environmental monitoring devices 110 (such as owners or renters of these environmental monitoring devices), suppliers of components or spare parts, maintenance personnel, security personnel, emergency service personnel, insurance companies, insurance brokers, realtors, leasing agents, apartment renters, hotel guests, hotels, restaurants, businesses, organizations, governments, potential buyers of physical objects, a shipping or transportation company, etc. For example, based on the analyzed sensor data feedback about the operation of one or more of optional electronic devices 114 (such as a legacy electronic device) may be provided by one or more of environmental monitoring devices 110 on displays, using speakers and, more generally, on physiological output devices that provide sensory information (such as lighting or an illumination pattern). Thus, a user may be alerted if a legacy electronic device is activated or if it is not functioning properly. More generally, the feedback may indicate the presence of an environmental condition in one of the environments, such as: presence of an allergen, fire, flooding, a power outage, a chemical contaminant, an infestation, opening of a door, an individual getting out of bed, an individual waking up, an individual crying, an individual tossing and turning in bed, an individual shivering, a change in health condition of an individual (such as an illness or a chronic disease), etc.

Additionally, one or more of environmental monitoring devices 110 may provide a maintenance notification based on the analyzed sensor data, which is associated with the operation of one of optional electronic devices 114 (such as a legacy electronic device or an electronic device that is included in a feedback loop with one of environmental monitoring devices 110) and/or which represents an environmental condition in one of the environments. For example, the maintenance notification may include an instruction to replace a battery. In addition, the maintenance notification and any subsequent remedial action (such as a repair or service performed on one of optional electronic devices 114) may be stored in the historical record or log for one of the environments (such as the historical record maintained by data server 116).

In some embodiments, a regulator device (such as one of optional electronic devices 114, *e*.*g*., a thermostat, a humidifier, an air purifier, a ventilator device, a fan, a motor, a window opener, a door opener, an access-control device for the environment, etc.) that regulates an environmental condition is modified based on a comparison of the sensor data and a target value of the environmental condition in one of the environments. For example, one of environmental monitoring devices 110 may provide a control signal to the regulator device to modify an environmental condition (such as the temperature, humidity, airflow, etc.) based on a comparison of the sensor data and a target value performed by the environmental monitoring device.

In these ways, system 100 may be used to: implement an information network with one or more legacy electronic devices; securely aggregate and selectively disseminate sensor data about environmental conditions; provide feedback about one or more environmental conditions in one or more of the environments (such as an alert provided by one of optional electronic devices 114); allow users to remotely control alerts provided by environmental monitoring devices 110 by modifying alert settings of environmental monitoring devices 110 from client devices 122; and facilitate monitoring and maintaining of one or more environmental conditions in the one or more environments.

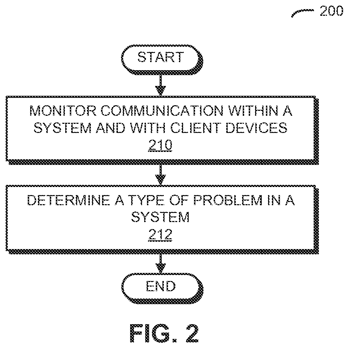

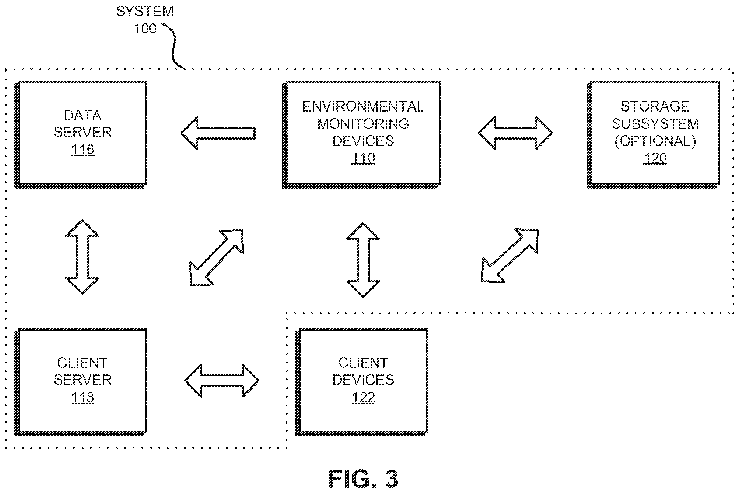

However, these capabilities of system 100 may be subject to disruption in the event of a problem in system 1 00 (such as a network problem or a power failure). Diagnosing the type of problem may allow prompt remedial action, thereby allowing the problem to be resolved and, more generally, the performance of system 100 to be improved, such as: the 'up time' or 'available time,' the network capacity, etc. Furthermore, this diagnostic capability may improve user understanding about the origin of the problem(s), which may facilitate improved customer relationships and retention. In some embodiments, the ability to diagnose the type of problem allows the data quality or integrity of the historical record of the environmental condition(s) in one or more environments to be maintained by determining when a disruption in the monitoring of the one or more environmental conditions is due to an unintentional or an unavoidable act (such as a power failure). As described further below with reference to FIGs. 2 and 3, system 100 may address these challenges by monitoring the communication among the electronic devices via 'connections' (or information flows) in system 100. Based on the available connections and/or disruptions (if any) to the connections, system 100 may be able to determine a type of problem affecting at least a portion of system 100. In some embodiments, the connection monitoring is distributed throughout system 100. For example, instances of a monitoring application executing on the electronic devices may monitor the connections in system 100 (such as the ability of a given electronic device to communicate with other electronic devices in system 100), and may report the connection-monitoring results to the other electronic devices in system 100 (e.g., regularly, after a time interval has elapsed, and/or based on an event, such as when the connection-monitoring results are requested). In these embodiments, the connection-monitoring results may be aggregated by multiple electronic devices throughout system 100, which may allow the connection-monitoring results to be readily accessed in the event of a problem in system 100. Alternatively or additionally, the connection monitoring may be centralized in system 100, such as on data server 116 and/or client server 118, which may monitor the connections and aggregate the connection- monitoring results.

Although we describe the environment shown in FIG. 1 as an example, in alternative embodiments, different numbers or types of electronic devices may be present. For example, some embodiments comprise more or fewer electronic devices.

We now describe embodiments of the diagnostic technique. FIG. 2 presents a flow diagram illustrating method 200 for determining a type of problem in system 100 (FIG. 1), which may be performed by one or more of the electronic devices in FIG. 1. During operation, the one or more electronic devices monitor communication within a system and with client devices (operation 210), where the system includes environmental monitoring devices, a data subsystem, and a client subsystem, and where the environmental monitoring devices monitor and communicate information about environmental conditions in external environments that include the environmental monitoring devices. Then, the one or more electronic devices determine the type of problem in the system (operation 212) based on disruptions in connections that convey information during the communication within the system and with the client devices.

In some embodiments of one or more of the preceding method, there may be additional or fewer operations. Furthermore, the order of the operations may be changed, and/or two or more operations may be combined into a single operation.

In an exemplary embodiment of the communication among the electronic devices in system 100 is shown in FIG. 3, as illustrated by the arrows which represent connections or information flows. In particular, environmental monitoring devices 110 may monitor environmental conditions in the one or more environments that include environmental monitoring devices 110. In addition, environmental monitoring devices 110 may provide: sensor data, analyzed data, alerts associated with the environmental conditions in the one or more environments, and more generally information (such as authorization information) to data server 116 (and, more generally, a data subsystem), client server 118 (and, more generally, a client subsystem), optional storage subsystem 120 and/or one or more client devices 122.

Moreover, data server 116 may: receive the information from environmental monitoring devices 110; optionally analyze the sensor data; associate the information with user accounts based on user-account information (such as usernames, device identifiers, etc.) received from client server 118 via a network (such as network 126 in FIG. 1, which, in general, may be associated with multiple, different service providers); and/or store the information. Furthermore, client server 118 may: receive the information from environmental monitoring devices 110; interact with data server 116 and client, devices 122 via the network; and provide the user-account information to data server 116.

As noted previously, system 100 may monitor the communication within system 100 and with client devices 122. Then, system 100 may detect disruptions in the connections and/or available connections that convey information during the communication and the interactions among environmental monitoring devices 110, data server 116, client server 118, optional storage subsystem 120 and/or client devices 122 to determine one or more type of problems in system 100. For example, system 1 00 may determine a type of problem based on whether: a connection is disrupted at a location that includes one device in system 100, a first set of connections are disrupted in a region that includes multiple devices in system 100, and/or a second set of connection (which includes the first set of connections) are disrupted throughout system 100.

In particular, the type of problem may involve disruption of connections among: environmental monitoring devices 110 and data server 116, environmental monitoring devices 110 and client server 118, environmental monitoring devices 110 and client devices 122, client devices 122 and data server 116, and/or client devices 122 and client server 118. Then, system 100 may determine that the type of problem includes a power failure (or outage) when all the connections are disrupted in a region in system 100 that includes multiple devices. Alternatively, system 100 may determine that the type of problem includes a communication failure associated with one or more of the services providers of the network when a majority of the connections are disrupted in more than one region in system 100. For example, if most, but not all of the disrupted connections are in the same region, then an Internet outage is likely because not all the users have the same Internet provider, but a power failure is unlikely because power is probably still available at some of the locations in environments having different Internet providers.

In some embodiments, system 100 determines that the type of problem includes a problem at a location in system 100 when the disrupted connections are associated with a single user. For example, the local problem may include: a power disruption at the user's location (such as a blow fuse), a network-connection problem at the user's location (such as a problem with an Internet connection), and/or a router problem at the user's location (such as a problem with a router configuration). Thus, if the type of problem involves disruption of connections among environmental monitoring devices 110 and client, devices 122, system 100 may determine that the type of problem includes the router problem at the user's location in system 100. Moreover, if the type of problem involves disruption of connections among one of client devices 122 and environmental monitoring devices 110, system 100 may determine that the type of problem includes a power disruption at the user's location in system 100 (such as a fuse) and/or a problem with the client device.

Furthermore, if the type of problem involves disruption of connections with environmental monitoring devices 110 at different locations, having a common characteristic, in system 100, system 1 00 may determine that the type of problem includes a failure mode of environmental monitoring devices 110. For example, the common characteristic may include: a geographic condition at the locations, a position of environmental monitoring devices 110 within the locations (such as in the bathroom), and/or duration of ownership of environmental monitoring devices 110 (which may indicate a bad manufacturing batch).

Additionally, if the type of problem involves disruption of connections among environmental monitoring devices 110 and optional storage subsystem 120, system 100 may determine that the type of problem includes: a failure mode of environmental monitoring devices 110, optional storage subsystem 120 is full, optional storage subsystem 120 is suffering a device failure or input/output failure, optional storage subsystem 120 is offline, and/or a network-connection problem with optional storage subsystem 120 (such as a problem with an interface circuit). Alternatively, if the type of problem involves disruption of a connection between data sever 116 and client server 118, system 100 may determine that the type of problem includes: a problem at a data center that stores the information and/or a problem with a database.

Moreover, if the type of problem involves disruption of a connection between client server 118 and environmental monitoring devices 110, the system may determine that the type of problem includes a problem with the network (such as the Internet is unavailable). Alternatively, if the type of problem involves disruption of a connection between client server 118 and client devices 122, system 100 may determine that the type of problem includes: a power failure, a problem with the network, and/or a problem with client server 118. Furthermore, if the type of problem involves disruption of a connection between a client device and environmental monitoring devices 110, system 100 may determine that the type of problem includes: a power failure and/or a problem with the network (such as a problem with a local network). Additionally, if the type of problem involves disruption of a connection between data server 116 and one of environmental monitoring devices 110, system 100 may determine that the type of problem includes: a power failure, and/or a problem with the network (such as the Internet is unavailable and/or a local network is down).

Thus, the determined type of problem may depend on the type of electronic device that has a disrupted connection, whether there are one or more disrupted connections in system 1 00, the geographic distribution of the one or more disrupted connections, etc. In general, the determined type of problem may include one or more possible types of problems. This determined subset of the types of problems may be refined when additional information is available. For example, a given electronic device in system 100 may determine the type of problem based on monitoring of its connections with other electronic devices. Then, this partial result may be refined when additional partial results (*e*.*g*., additional determined probable or possible type(s) of problcm(s)) are received from one or more other electronic devices in system 100 based on monitoring of their connections in system 100.

We now describe embodiments of the environmental monitoring device, the data server, the client server, and other electronic devices in FIG. 1. FIG. 4 presents a block diagram illustrating environmental monitoring device 400, such as one of environmental monitoring devices 110. This electronic device includes processing subsystem 410, memory subsystem 412, a networking subsystem 414, an optional user-interface subsystem 416, sensor subsystem 418 (*i.e.,* a data collection subsystem), feedback subsystem 432 and power subsystem 446. Processing subsystem 410 includes one or more devices configured to perform computational operations. For example, processing subsystem 410 can include one or more microprocessors, application-specific integrated circuits (*ASICs*), microcontrollers, programmable-logic devices, and/or one or more digital signal processors (*DSPs*).

In addition, processing subsystem 410 may include an optional secure channel 420 that performs secure processing of information, securely communicates with other components in environmental monitoring device 400, and more generally performs secure services. This secure channel may include one or more processors, a secure boot *ROM*, one or more security peripherals, and/or other components. The security peripherals may be hardware-configured to assist in the secure services performed by optional secure channel 420. For example, the security peripherals may include: authentication hardware implementing various authentication techniques, encryption hardware configured to perform encryption, secure-interface controllers configured to communicate over a secure interface to other components, and/or other components. In some embodiments, instructions executable by optional secure channel 420 are stored in a trust zone in memory subsystem 412 that is assigned to optional secure channel 420, and optional secure channel 420 fetches the instructions from the trust zone for execution. Optional secure channel 420 may be isolated from the rest of processing subsystem 410 except for a carefully controlled interface, thus forming a secure region for optional secure channel 420 and its components. Because the interface to optional secure channel 420 is carefully controlled, direct access to components within optional secure channel 420 (such as a processor or a secure boot *ROM*) may be prevented. In some embodiments, optional secure channel 420 encrypts and/or decrypts authentication information communicated with optional user-interface subsystem 416 and/or received via networking subsystem 414, and encrypts and/or decrypts information (such as sensor data) communicated with sensor subsystem 418.

Memory subsystem 412 includes one or more devices for storing data and/or instructions for processing subsystem 410, networking subsystem 414, optional user-interface subsystem 416 and/or sensor subsystem 418. For example, memory subsystem 412 can include dynamic random access memory (*DRAM*), static random access memory (*SRAM*), and/or other types of memory. In some embodiments, instructions for processing subsystem 410 in memory subsystem 412 include: one or more program modules 438 or sets of instructions (such as an environmental monitoring application, a data-logging application, a data-sharing application, a maintenance application and/or a diagnostic application), which may be executed in an operating environment (such as operating system 436) by processing subsystem 410. Note that the one or more computer programs may constitute a computer-program mechanism or a program module. Moreover, instructions in the various modules in memory subsystem 412 may be implemented in: a high-level procedural language, an object-oriented programming language, and/or in an assembly or machine language. Furthermore, the programming language may be compiled or interpreted, *e*.*g*., configurable or configured (which may be used interchangeably in this discussion), to be executed by processing subsystem 410.

In addition, memory subsystem 412 can include mechanisms for controlling access to the memory. In some embodiments, memory subsystem 412 includes a memory hierarchy that comprises one or more caches coupled to a memory in environmental monitoring device 400. In some of these embodiments, one or more of the caches is located in processing subsystem 410.

In some embodiments, memory subsystem 412 is coupled to one or more high-capacity mass-storage devices (not shown). For example, memory subsystem 412 can be coupled to a magnetic or optical drive, a solid-state drive, or another type of mass-storage device. In these embodiments, memory subsystem 412 can be used by environmental monitoring device 400 as fast-access storage for often-used data, while the mass-storage device is used to store less frequently used data.

Networking subsystem 414 includes one or more devices configured to couple to and communicate on a wired, optical and/or wireless network (*i*.*e*., to perform network operations), including an interface circuit 422 (such as a ZigBee® communication circuit) and one or more antennas 424. For example, networking subsystem 414 can include: a ZigBee® networking subsystem, a Bluetooth™ networking system (which can include Bluetooth™ Low Energy, *BLE* or Bluetooth™ *LE*), a cellular networking system (*e*.*g*., a 3G/4G network such as *UMTS*, *LTE*, etc.), a *USB* networking system, a networking system based on the standards described in *IEEE* 802.11 (*e*.*g*., a Wi-Fi® networking system), an Ethernet networking system, an infra-red communication system, a power-line communication system and/or another communication system (such as a near-field-communication system or an ad-hoc-network networking system).

Moreover, networking subsystem 414 includes processors, controllers, radios/antennas, sockets/plugs, and/or other devices used for coupling to, communicating on, and handling data and events for each supported networking or communication system. Note that mechanisms used for coupling to, communicating on, and handling data and events on the network for each network system are sometimes collectively referred to as a 'network interface' for the network system. Moreover, in some embodiments a 'network' between the electronic devices does not yet exist. Therefore, environmental monitoring device 400 may use the mechanisms in networking subsystem 414 for performing simple wireless communication between environmental monitoring device 400 and other electronic devices, *e*.*g*., transmitting advertising frames, petitions, beacons and/or information associated with near-field communication.

Optional user-interface subsystem 416 may include one or more processors, controllers and devices for receiving information for a user of environmental monitoring device 400. For example, optional user-interface subsystem 416 may include a user-interface device 426 (and, more generally, a user-input mechanism), such as: a keypad, a touch-sensitive display, optical character recognition, image recognition, gesture recognition, biometric recognition (such as a fingerprint, a palm print, a retinal pattern, etc.), and/or voice recognition. The information may include: authentication information from the user (such as a passcode or a security code for unlocking access to environmental monitoring device 400, some of the functionality of environmental monitoring device 400 and/or to allow environmental monitoring device 400 to be moved from a current location); user-feedback about a request for access to sensor data associated with environmental monitoring device 400; and/or user preferences for operation of environmental monitoring device 400 (such as alarm settings, when and/or how to provide notifications, etc.). This information may be securely communicated to processing subsystem 410 (such as by encrypting the information). In addition, the information communicated may also include an encryption key that is specific to environmental monitoring device 400 and/or components in environmental monitoring device 400, such as optional secure channel 420.

Furthermore, sensor subsystem 418 may include one or more sensor devices 428 (or a sensor array), which may include one or more processors and memory. For example, the one or more sensor devices 428 may include: a thermal sensor (such as a thermometer), a humidity sensor, a barometer, a camera or video recorder (such as a *CCD* or *CMOS* imaging sensor), one or more microphones (which may be able to record acoustic information in mono or stereo), an infrared sensor (which may be active or passive), a microscope, a particle detector (such as a detector of dander, pollen, dust, exhaust, etc.), an air-quality sensor, a particle sensor, an optical particle sensor, an ionization particle sensor, a smoke detector (such as an optical smoke detector or an ionizing smoke detector), a radon detector, a carbon-monoxide detector, a chemical sensor or detector, a volatile-organic-compound sensor, a combustible gas sensor, a chemical-analysis device, a mass spectrometer, a microanalysis device, a nano-plasmonic sensor, a genetic sensor (such as a micro-array), an accelerometer, a position or a location sensor (such as a location sensor based on the Global Positioning System or *GPS*), a gyroscope, a motion sensor (such as a light-beam sensor), a contact sensor, a strain sensor (such as a strain gauge), a proximity sensor, a microwave/radar sensor (which may be active or passive), an ultrasound sensor, a vibration sensor, a fluid flow sensor, a photo-detector, a Geiger counter, a radiofrequency radiation detector, and/or another device that measures a physical effect or that characterizes an environmental factor or physical phenomenon (either directly or indirectly).

Moreover, the one or more sensor devices 428 may include redundancy (such as multiple instances of a type of sensor device) to address sensor failure or erroneous readings, to provide improved accuracy and/or to provide improved precision. Note that sensor data acquired by the one or more sensor devices 428 may be securely communicated to processing subsystem 410 (such as by encrypting the sensor data). In addition, the sensor data communicated may also include a digital signature that is specific to environmental monitoring device 400 and/or components in environmental monitoring device 400, such as optional secure channel 420.

Feedback subsystem 432 may include a display 434 for displaying information, such as: feedback about an environmental condition in an environment that includes environmental monitoring device 400, information about the operation of environmental monitoring device 400, and/or a maintenance notification associated with a regulator device in the environment or environmental monitoring device 400 (such as when one of one or more power sources 448 needs to be replaced). In particular, feedback subsystem 432 may include a display driver and display 434, such as: a liquid-crystal display, an e-ink display, an organic light emitting diode display, a braille output device, a laser projection display, a multi-touch touchscreen, a color-wheel display, etc. Note that display subsystem 432 may be included in optional user-interface subsystem 416.

In addition, feedback subsystem 432 may include one or more light sources 442 (and, more generally, an illumination mechanism), such as: incandescent light sources, electroluminescent light sources (*e*.*g*., light emitting diodes), etc. These light sources may provide different illumination patterns, which may be programmable. The different illumination patterns may have: different spatial patterns in the environment that includes environmental monitoring device 400, different wavelengths of light and/or different light intensities. Thus, a particular illumination pattern may illuminate at least a portion of the environment.

During operation of environmental monitoring device 400, processing subsystem 410 may execute one or more program modules 438, such as an environmental monitoring application. In particular, environmental monitoring application may instruct one or more sensor devices 428 to measure or acquire sensor data that represents one or more environmental conditions in an environment that includes environmental monitoring device 400. For example, the environmental condition may include: presence of an individual (such as a resident or a potential burglar), opening of a door, an individual getting out of bed, an individual waking up, an individual crying, an individual tossing and turning in bed, an individual shivering, presence of a chemical compound (such as exhaust, carbon monoxide, radon, smoke, a non-volatile organic compound and/or a volatile organic compound), presence of an allergen (such as dander or pollen), presence of dust, presence of a fungus, a fire, presence of smoke, flooding, a water leak, a chemical leak, presence of an insect or rodent (and, more generally, an infestation), discharge of a firearm, a possible altercation or criminal act (such as domestic violence), a medical emergency, a change in health condition of an individual, availability of electrical power (such as whether there is a power failure), a lighting condition (such as whether the lights are on or off), temperature deviating from a predefined target, and/or humidity deviating from a predefined target. In some embodiments, the environmental condition is associated with the operation of a regulator device (which may or may not be a legacy electronic device). The regulator device (and, more generally, one of optional electronic devices 114 in FIG. 1) may include: a smoke detector, a thermostat, a carbon-monoxide detector, an appliance, a pet or animal feeder, a plant or animal watering device, a clock, a security alarm, a humidifier, an air filter, a switch, a light, etc. Note that the monitoring of the sensor data may be continuous, periodic (such as after a time interval has elapsed) or as needed (such as event-driven monitoring).

The sensor data may be communicated to processing subsystem 410. Then, the environmental monitoring application may optionally analyze the sensor data, *e*.*g*., calculating a discrete or a Fourier transform, determining a histogram, performing filtering or signal processing, performing data compression, calibrating one or more of sensor devices 428, managing power consumption of environmental monitoring device 400, identifying one or more of sensor devices 428 that are not working or which are outputting erroneous sensor data, applying another transformation, calculating statistics (such as moments of a distribution), performing supervised learning (such as Bayesian analysis), performing noise reduction, normalizing the sensor data, converting units, etc. (Alternatively or additionally, the sensor data or a document summarizing the sensor data may be communicated to another electronic device using networking subsystem 414 and the analysis may be performed remotely, *e.g.* by data server 116 in FIG. 1.) For example, the analysis may determine whether an environmental condition is present in the environment. (In some embodiments, this analysis is based on information, such as sensor data and/or environmental conditions, received from other environmental monitoring devices. This may allow calibration settings, such as environment-specific threshold values, to be determined for the environment and/or environmental monitoring device 400.)

Then, the environmental monitoring application may provide feedback to a user of environmental monitoring device 400, data server 116 (FIG. 1), client server 118 (FIG. 1), client devices 122 (FIG. 1) and/or directly to one of optional electronic devices 114 in FIG. 1 (if this electronic device is able to communicate with environmental monitoring device 400 via networking subsystem 414). In particular, the environmental monitoring application may instruct feedback subsystem 432 to provide sensory information, such as a text or graphical message, a graph, a report, a chart, a spectrum, a video displayed on display 434, a sound or audio message (such as an alert) output by optional speakers 440 and/or an illumination pattern output by optional light sources 442. For example, the sensory information may include: a range of values, numerical measurements, shades of gray (or grayscale), colors, chemical formulas, images, illumination patterns, textures, patterns (which may correspond to one or more environmental conditions), tessellations with gradients of larger or smaller element sizes, and/or tessellations of increasing or decreasing element sizes (such as tessellation that are adjusted to be larger or smaller as a given environmental condition increases or decreases). Thus, in some embodiments the sensory information includes a change in the color of environmental monitoring device 400. Alternatively or additionally, the feedback may include a change in the illumination pattern provided by optional light sources 442. In some embodiments, the feedback is communicated using networking subsystem 414 and presented to the user (or other individuals) on another electronic device, such as one of client devices 122 in FIG. 1 (such as the user's cellular telephone, tablet computer or computer) that is used for remote visualization of: the sensor data, the analyzed sensor data, the environmental condition and/or the feedback.

In some embodiments, the environmental monitoring application may provide, via networking subsystem 414, the feedback to one or more of environmental monitoring devices 110 (FIG. 1) and/or other electronic devices (such as computers or servers associated with or operated on behalf of: component suppliers, retailers, insurance companies, security personnel, emergency service personnel, maintenance organizations, shipping companies, landlords or property owners, a corporate-compliance organization, inspectors, businesses, government agencies, etc.). For example, the environmental monitoring application may utilize a Short Message Service, email, a social network and/or a messaging service with a restricted number of characters per message. Alternatively or additionally, the feedback may be posted to a web page or website (and, more generally, a location on a network), and one or more recipients may be notified via networking subsystem 414, *e*.*g*., a link to the location may be provided to the recipients.

In turn, an electronic device (such as one of client devices 1 22 in FIG. 1) may, via networking subsystem 414, modify settings of environmental monitoring device 400 (such as alarm settings) that change how the feedback is provided locally (*e*.*g*., using optional speakers 440) and/or remotely (*e*.*g*., using networking subsystem 414). For example, a user of one of client devices 122 in FIG. 1 may access a web page associated with a provider of environmental monitoring device 400 to modify the settings.

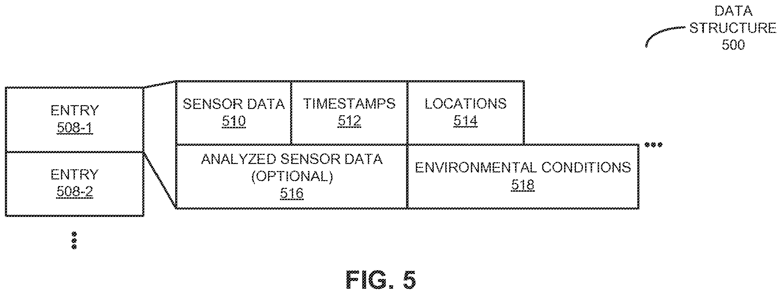

Note that the sensor data and/or the analyzed sensor data may be stored, at least temporarily, in a data structure in memory subsystem 412. This is shown in FIG. 5, which presents a data structure 500. In particular, data structure 500 may include entries 508 with: sensor data 510, timestamps 512, locations (or regions) 514, optional analyzed sensor data 516, and/or environmental conditions 518. Note that locations 514 (or location information) may specify locations were the sensor data was acquired or measured. For example, the location information may be measured using a sensor device in environmental monitoring device 400 in FIG. 4 (such as a location monitor) and/or the location information may be received from another electronic device that is proximate to environmental monitoring device 400 in FIG. 4 (such as an individual's cellular telephone). Thus, the location may be determined via *GPS* and/or a cellular-telephone network (*e*.*g*., using triangulation or trilateration).

Referring back to FIG. 4, in some embodiments the one or more program modules 438 include a data-logging application. In conjunction with data server 116 (FIG. 1), the data-logging application may maintain a secure, certified historical record or log for the environment and/or a physical object in an environment (such as a 'homefax' record for an apartment or a building). Note that the physical object may include: a portion of a building (*e*.*g*., an apartment, a hotel room, an office suite, a storage unit, etc.), the building, a container (such as a box, a package or a shipping container), a vehicle (such as a car or truck), a liquid, and/or a train car. Notably, sensor subsystem 418 may securely communicate the sensor data to processing subsystem 410. Using optional secure channel 420, a digital signature for the sensor data may be generated, *e*.*g*., using a secure hash function and/or an encryption key that are associated with environmental monitoring device 400 and/or optional secure channel 420. For example, the digital signature may be generated using a secure hash of a time stamp, a random number (or a pseudorandom number, both of which are henceforth referred to as a 'random number'), and/or an identifier of environmental monitoring device 400. Then, the data-logging application may instruct networking subsystem 414 to communicate a certified data package (with the sensor data or analyzed sensor data, the digital signature, location information and/or an associated time stamp) to data server 116 (FIG. 1) for inclusion in the historical record or log for the environment.

Moreover, the one or more program modules 438 may include a data-sharing application. This data-sharing application may enable a designated or authorized recipient to access protected sensor data that is stored in data server 116 (FIG. 1). In particular, when executed by processing subsystem 410, the data-sharing application may instruct sensor subsystem 418 to measure or collect sensor data that represents the environmental condition. Then, the data-sharing application may protect the sensor data and/or analyzed sensor data. For example, the sensor data and/or the analyzed sensor data may be encrypted using an encryption key by processing subsystem 410 and/or optional secure channel 420. Alternatively or additionally, the sensor data and/or the analyzed sensor data may be protected using a secure hash function in conjunction with an identifier of environmental monitoring device 400 and/or a random number generated by processing subsystem 410. Next, data-sharing application may instruct networking subsystem 414 to provide the protected sensor data and/or the analyzed sensor data to data server 116 (FIG. 1).

Subsequently, when environmental monitoring device 400 receives, via networking subsystem 414, a request for the sensor data from one of client devices 122 (FIG. 1), the data-sharing application may access a predefined authorization preference of a user of environmental monitoring device 400 that is stored in memory subsystem 412. If the predefined authorization preference of the user authorizes the recipient associated with the request, the data-sharing application may provide, via networking subsystem 414, authorization information to data server 116 (FIG. 1) to release the sensor data to the client device. Alternatively, the data-sharing application may instruct feedback subsystem 432 to request feedback about the request from the user. This user feedback may be received via optional user-interface subsystem 416. If the user feedback approves the request, the data-sharing application may provide, via networking subsystem 414, authorization information to data server 116 (FIG. 1) to release the sensor data to the client device. (Thus, the user of environmental monitoring device 400 may control when other parties are allowed to access the sensor data.) Note that the data-sharing application may also provide, via networking subsystem 414, protection information specifying how to unprotect the sensor data to data server 116 (FIG. 1) and/or to the client device. For example, the data-sharing application may provide the encryption key and/or may indicate the secure hash function, the random number and/or the identifier. In some embodiments, this protection information is received from the user of environmental monitoring device 400, *e*.*g*., via networking interface 414 and/or optional user-interface subsystem 416.

In some embodiments, the one or more program modules 438 include a maintenance application. This maintenance application may provide a maintenance notification related to the operation of environmental monitoring device 400, one of the other electronic devices in FIG. 1 and/or one or more environmental conditions in the one or more environments. For example, the maintenance application may provide an instruction to: perform maintenance, replace a battery (and, more generally, one of the one or more power sources 448), replace one of the one or more sensor devices 428, order another replacement component (such as a filter) and/or to take out the garbage. When providing the maintenance notification, the maintenance application may instruct feedback subsystem 432 to present the maintenance notification to the user or maintenance personnel, and/or may instruct networking subsystem 414 to communicate the maintenance notification to another electronic device, such as the user's cellular telephone. In some embodiments, maintenance application suggests or recommends a specific provider or product to address or perform a remedial action in response to a maintenance notification. Alternatively, maintenance application may direct a user to a document (such as a web page or website) that includes information related to a maintenance notification.

In some embodiments, the one or more program modules 438 include a diagnostic application. This diagnostic application may monitor communication within system 100 (FIG. 1) and with client devices 122 (FIG. 1). Then, diagnostic application may determine a type of problem in system 100 (FIG. 1) based on disruptions (if any) in connections and/or available connections that convey information during the communication within system 100 (FIG. 1) and with client devices 122 (FIG. 1). The results of the connection monitoring and/or the determined type of problem may be, at least temporarily, stored in memory subsystem 412. In addition, in response to a request received via networking subsystem 414 or after an elapsed time since a previous update to the connection-monitoring results, the diagnostic application may provide information specifying the connection-monitoring results and/or the determined type of problem to one or more of the other electronic devices in FIG. 1. In some embodiments, the connection monitoring performed by environmental monitoring device 400 is partial, *e*.*g*., it may only include connections with those electronic devices in system 100 (FIG. 1) that communicate with environmental monitoring device 400. In these embodiments, environmental monitoring device 400 may receive information specifying connection-monitoring results for other connections and/or a determined type of problem (or probable type of problem) from one or more of the other electronic devices in FIG. 1. This received information may be used by the diagnostic application to determine the type of problem. Once the type of problem is determined, networking subsystem 414 may communicate a request for remedial action, *e*.*g*., to: maintenance personnel, a provider of system 100 (FIG. 1) and/or a provider of environmental monitoring device 400. In some embodiments, the determined type of problem is communicated by networking subsystem 214 to data server 116 (FIG. 1) for inclusion in the historical record or log for the environment. As noted previously, this may allow the data quality or integrity of the historical record for the environment to be maintained or verified by determining when a disruption in the monitoring of the one or more environmental conditions is due to an unintentional or an unavoidable act (such as a power failure).

Moreover, environmental monitoring device 400 may include power subsystem 446 with one or more power sources 448. Each of these power sources may include: a battery (such as a rechargeable or a non-rechargeable battery), a *DC* power supply, a transformer, and/or a switched-mode power supply. Moreover, the one or more power sources 448 may operate in a voltage-limited mode or a current-limited mode. Furthermore, the one or more power sources 448 may be mechanically and electrically coupled by an adaptor to a wall or electrical-outlet socket plug (such as a two or three-pronged electrical-outlet plug, which may be collapsible or retractable), a light socket (or light-bulb socket), electrical wiring, a generator, a *USB* port, a cellular-telephone charger cable, a photodiode, a photovoltaic cell, etc. This mechanical and electrical coupling may be rigid or may be remateable.

In some embodiments, power subsystem 446 includes or functions as a pass-through power supply for an electrical connector to an external electronic device (such as an appliance) that can be plugged into the electrical connector. Power to this electrical connector (and, thus, the external electronic device) may be controlled locally by processing subsystem 410 or optional user-interface subsystem 416, feedback subsystem 432 (such as via optional switch 444), and/or remotely via networking subsystem 414. Moreover, the power to the electrical connector may be turned on or off in response to sensor data provided by sensor subsystem 418 (such as when a signal is greater than or less than a user-specified or an environmental-regulation-specified threshold value, *e*.*g*., a dust concentration of 20 mg/m³).

Within environmental monitoring device 400, processing subsystem 410, memory subsystem 412, networking subsystem 414, optional user-interface subsystem 416, sensor subsystem 418, feedback subsystem 432, and/or power subsystem 446 may be coupled using one or more interconnects, such as bus 430. These interconnects may include an electrical, optical, and/or electro-optical connection that the subsystems can use to communicate commands and data among one another. Note that different embodiments can include a different number or configuration of electrical, optical, and/or electro-optical connections among the subsystems. In some embodiments, environmental monitoring device 400 can detect tampering with secure components (such as optional secure channel 420 and/or bus 430) and may destroy encryption/decryption keys or information (such as a stored sensor data or authentication information) if tampering is detected.

Environmental monitoring device 400 can be (or can be included in) any electronic device with at least one network interface. For example, environmental monitoring device 400 can be (or can be included in): a sensor (such as a smart sensor), a tablet computer, a smartphone, a cellular telephone, an appliance, a regulator device, a consumer-electronic device (such as a baby monitor), a portable computing device, test equipment, a digital signal processor, a controller, a personal digital assistant, a laser printer (or other office equipment such as a photocopier), a personal organizer, a toy, a set-top box, a computing device (such as a laptop computer, a desktop computer, a server, and/or a subnotebook/netbook), a light (such as a nightlight), an alarm, a smoke detector, a carbon-monoxide detector, a monitoring device, and/or another electronic device (such as a router or a switch).

Although specific components are used to describe environmental monitoring device 400, in alternative embodiments, different components and/or subsystems may be present in environmental monitoring device 400. For example, environmental monitoring device 400 may include one or more additional processing subsystems, memory subsystems, networking subsystems, user-interface subsystems, sensor subsystems, feedback subsystems, and/or power subsystems. Moreover, one or more of the subsystems may not be present in environmental monitoring device 400. Furthermore, in some embodiments, environmental monitoring device 400 may include one or more additional subsystems that are not shown in FIG. 4. For example, environmental monitoring device 400 can include: one or more optional speakers 440 (and, more generally, a physiological output subsystem that provides sensory information to the user), one or more motors that rotate one or more color wheels (or color-wheel indicators) with low power consumption (such as a brushed motor, a brushless motor, a piezo-type ratcheting motor, etc.), and/or an alarm subsystem. Note that the one or more optional speakers 440 and a microphone may be used to provide audio conferencing capability to another electronic device. Additionally, note that a given motor may rotate a color wheel using an open-loop control technique or a closed-loop control technique based on an encoder, such as: an optical encoder, a mechanical encoder, a potentiometer, etc. Although separate subsystems are shown in FIG. 4, in some embodiments, some or all of a given subsystem or component can be integrated into one or more of the other subsystems or components in environmental monitoring device 400. For example, in some embodiments the one or more program modules 438 are included in operating system 436. In some embodiments, a component in a given subsystem is included in a different subsystem, *e*.*g*., optional switch 444 may be included in optional user-interface subsystem 416.

Moreover, the circuits and components in environmental monitoring device 400 may be implemented using any combination of analog and/or digital circuitry, including: bipolar, *PMOS* and/or *NMOS* gates or transistors. Furthermore, signals in these embodiments may include digital signals that have approximately discrete values and/or analog signals that have continuous values. Additionally, components and circuits may be single-ended or differential, and power supplies may be unipolar or bipolar.

An integrated circuit may implement some or all of the functionality of networking subsystem 414 (such as a radio) and, more generally, some or all of the functionality of environmental monitoring device 400. Moreover, the integrated circuit may include hardware and/or software mechanisms that are used for transmitting wireless signals from environmental monitoring device 400 to, and receiving signals at environmental monitoring device 400 from other electronic devices. Aside from the mechanisms herein described, radios are generally known in the art and hence are not described in detail. In general, networking subsystem 414 and/or the integrated circuit can include any number of radios. Note that the radios in multiple-radio embodiments function in a similar way to the radios described in single-radio embodiments.

In some embodiments, networking subsystem 414 and/or the integrated circuit include a configuration mechanism (such as one or more hardware and/or software mechanisms) that configures the radio(s) to transmit and/or receive on a given communication channel (*e.g.*, a given carrier frequency). For example, in some embodiments, the configuration mechanism can be used to switch the radio from monitoring and/or transmitting on a given communication channel to monitoring communication and/or transmitting on a different communication channel. (Note that 'monitoring' as used herein comprises receiving signals from other electronic devices and possibly performing one or more processing operations on the received signals, *e*.*g*., determining if the received signal comprises an advertising frame, a petition, a beacon, etc.)

While a communication protocol compatible with ZigBee® was used as an illustrative example, the described embodiments of environmental monitoring device 400 may use a variety of network or communication interfaces. Furthermore, while some of the operations in the preceding embodiments were implemented in hardware or software, in general the operations in the preceding embodiments can be implemented in a wide variety of configurations and architectures. Therefore, some or all of the operations in the preceding embodiments may be performed in hardware, in software or both. For example, at least some of the operations performed by processing subsystem 410 may be performed by sensor subsystem 418.

Furthermore, while the preceding discussion focused on the hardware, software and functionality in environmental monitoring device 400, data server 116 (FIG. 1), client server 118 (FIG. 1), optional storage subsystem 120 (FIG. 1), and/or client devices 122 (FIG. 1) may have the same or similar hardware (processors, memory, networking interfaces, etc.) and/or software to support the operations performed by these electronic devices or systems. This is shown in FIG. 6, which presents a block diagram illustrating electronic device 600, such as data server 116 (FIG. 1). In particular, electronic device 600 includes processing subsystem 610, memory subsystem 612 and/or a networking subsystem 614. Processing subsystem 610 includes one or more devices configured to perform computational operations. For example, processing subsystem 610 can include one or more microprocessors, application-specific integrated circuits (*ASIC*s), microcontrollers, programmable-logic devices, and/or one or more digital signal processors (*DSP*s),

Memory subsystem 612 includes one or more devices for storing data and/or instructions for processing subsystem 610 and/or networking subsystem 614. For example, memory subsystem 612 can include dynamic random access memory (*DRAM*), static random access memory (*SRAM*), and/or other types of memory. In some embodiments, instructions for processing subsystem 610 in memory subsystem 612 include: one or more program modules 624 or sets of instructions (such as an archiving application, an analysis application, a data-sharing application, a notification application and/or a diagnostic application), which may be executed in an operating environment (such as operating system 622) by processing subsystem 610. Note that the one or more computer programs may constitute a computer-program mechanism or a program module. Moreover, instructions in the various modules in memory subsystem 612 may be implemented in: a high-level procedural language, an object-oriented programming language, and/or in an assembly or machine language. Furthermore, the programming language may be compiled or interpreted, *e.g*., configurable or configured (which may be used interchangeably in this discussion), to be executed by processing subsystem 610.

In addition, memory subsystem 612 can include mechanisms for controlling access to the memory. In some embodiments, memory subsystem 612 includes a memory hierarchy that comprises one or more caches coupled to a memory in electronic device 600. In some of these embodiments, one or more of the caches is located in processing subsystem 610.

In some embodiments, memory subsystem 612 is coupled to one or more high-capacity mass-storage devices (not shown). For example, memory subsystem 612 can be coupled to a magnetic or optical drive, a solid-state drive, or another type of mass-storage device. In these embodiments, memory subsystem 612 can be used by electronic device 600 as fast-access storage for often-used data, while the mass-storage device is used to store less frequently used data. Note that memory subsystem 612 may include multiple storage devices at one or more locations. Thus, data storage by memory subsystem 612 may be distributed, such as a cloud-based data-storage system.

Networking subsystem 614 includes one or more devices configured to couple to and communicate on a wired, optical and/or wireless network (*i*.*e*., to perform network operations), including an interface circuit 616 and one or more optional antennas 618. For example, networking subsystem 614 can include: a ZigBee® networking subsystem, a Bluetooth™ networking system (which can include Bluetooth™ Low Energy, *BLE* or Bluetooth™ *LE*), a cellular networking system (*e*.*g*., a 3G/4G network such as *UMTS*, *LTE*, etc.), a *USB* networking system, a networking system based on the standards described in *IEEE* 802.11 (*e*.*g*., a Wi-Fi® networking system), an Ethernet networking system and/or another communication system.

Moreover, networking subsystem 614 includes processors, controllers, radios/antennas, sockets/plugs, and/or other devices used for coupling to, communicating on, and handling data and events for each supported networking or communication system. Note that mechanisms used for coupling to, communicating on, and handling data and events on the network for each network system are sometimes collectively referred to as a 'network interface' for the network system.

During operation of electronic device 600, processing subsystem 610 may execute one or more program modules 624, such as an archiving application. This archiving application may receive, via networking interface 614, data packets from one or more of environmental monitoring devices 110 (FIG. 1). These data packets may include sensor data and/or analyzed sensor data. In some embodiments, processing subsystem 610 executes an analysis application, which analyzes the received sensor data. For example, the received sensor data may be: time stamped for time-series processing, filtered, compressed, etc. In some additional embodiments, processing subsystem 610 executes an analysis application, which can compare received sensor data analysis from one or more of environmental monitoring devices 110 (FIG. 1).

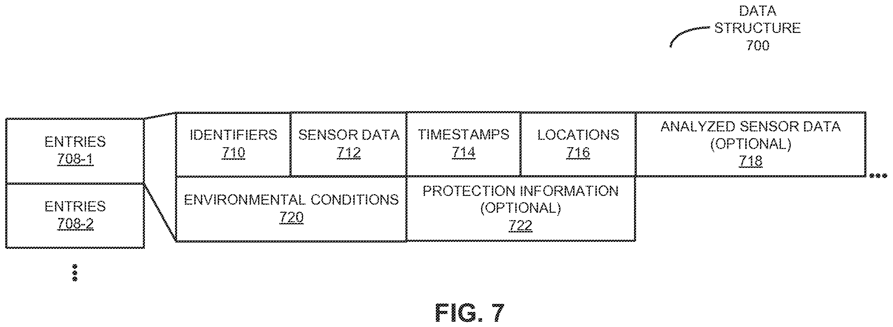

Then, archiving application may store the sensor data and/or the analyzed sensor data in a data structure in memory subsystem 612. This is shown in FIG. 7, which presents a block diagram illustrating data structure 700. In particular, data structure 700 may include entries 708 with: identifiers 710 of environmental monitoring devices, sensor data 712, timestamps 714, locations (or regions) 716, optional analyzed sensor data 718, environmental conditions 720 and/or optional protection information 722.

Referring back to FIG. 6, in some embodiments the received data packets include protected information. For example, the sensor data and/or the analyzed sensor data may be encrypted using an encryption key associated with one of environmental monitoring devices 110 (FIG. 1) and/or a secure channel in the one of environmental monitoring devices 110 (FIG. 1). Alternatively or additionally, there may be a digital signature associated with the sensor data and/or the analyzed sensor data, and/or the sensor data and/or the analyzed sensor data may be protected using a secure hash function. In these embodiments, optional protection information 722 (FIG. 7) may include information that can confirm the source(s) of the received data packets (such as one or more of environmental monitoring devices 110 in FIG. 1) and/or can be used to unprotect the sensor data and/or the analyzed sensor data. Note that optional protection information 722 (FIG. 7) may be received, via networking interface 614, from one of environmental monitoring devices 110 (FIG. 1). This protection information may include the encryption key or an encryption key associated with the encryption key (which can be used to confirm the digital signature and/or decrypt encrypted information). Networking device 614 can utilize: encrypted tunneling in at least one networking interface, a network switch and/or network router between one of environmental monitoring devices 110 and another electronic device (such as data server 116) in FIG. 1. Similarly, optional protection information 722 (FIG. 7) may specify the secure hash function, may include the identifier for one of environmental monitoring devices 110 (FIG. 1) and/or may include the random number (which also can be used to unprotect information). Note that protection information 722 (FIG. 7) may include fault tolerance information (such as parity bits or hashes) to aid in the detection of tampered data, corrupted data, and/or erroneous sensor readings in the event of a sensor failure or miscalibration.

In an exemplary embodiment, a public-private encryption-key technique is used. In particular, a certified, secure data package may be signed by one of environmental monitoring devices 110 (FIG. 1) using a public encryption key of data server 116 (FIG. 1), and the digital signature may be verified and the certified, secure data package may be decrypted using the private encryption key of data server 116 (FIG. 1). However, in other embodiments a symmetric encryption technique is used. Thus, the same encryption key may be used to sign, encrypt and/or decrypt the certified, secure data package.

In some embodiments, the one or more program modules 624 includes a data-sharing application. This data-sharing application may receive, via networking subsystem 614, authorization information for a recipient of sensor data and/or analyzed sensor data. In response to the authorization information, the data-sharing application may provide, via networking subsystem 614, the requested sensor data and/or analyzed sensor data to the recipient. Alternatively, the data-sharing application may provide, via networking subsystem 614, a pointer to a location in memory subsystem 612 where the recipient can access the requested sensor data and/or analyzed sensor data. Note that the data-sharing applicition may also optionally provide the optional protection information 722 (FIG. 7) to the recipient (which may allow the recipient to confirm the source(s) and/or to unprotect protected information).

Additionally, in some embodiments the one or more program modules 624 includes a notification application. This notification application may receive, via networking subsystem 614, information, such as feedback associated with one or more environmental conditions in the one or more environments in FIG. 1 and/or a notification (such as a maintenance notification). In response, the notification application may communicate, via networking subsystem 614, the information and/or one or more reports based on the information (such as daily, weekly or monthly summaries of analyzed sensor data, which may be included in documents or files) to: one or more of environmental monitoring devices 110 (FIG. 1), other electronic devices in FIG. 1, and/or additional electronic devices (such as computers or servers associated with or operated on behalf of: component suppliers, retailers, insurance companies, security personnel, emergency service personnel, maintenance organizations, shipping companies, landlords or property owners, a corporate-compliance organization, inspectors, businesses, government agencies, etc.). For example, the communication of the information may utilize a Short Message Service, email, a social network and/or a message service with a restricted number of characters per message. Alternatively, the information may be posted to a web page or website (and, more generally, a location on a network), and one or more recipients may be notified via networking subsystem 614, *e.g*., a link to the location may be provided to the recipients.

When the notification includes a maintenance notification, the archiving application may store information specifying the maintenance notification in the historical record or log for the environment. In addition, the archiving application may store any subsequent remedial action (such as a repair or service performed on an electronic device in the environment) in the historical record or log for the environment in memory subsystem 612.

In some embodiments, the one or more program modules 624 include a diagnostic application. This diagnostic application may monitor communication within system 100 (FIG. 1) and with client devices 122 (FIG. 1). Then, diagnostic application may determine a type of problem in system 100 (FIG. 1) based on disruptions (if any) in connections and/or available connections that convey information during the communication within system 100 (FIG. 1) and with client devices 122 (FIG. 1) and/or available connections within system 100 (FIG. 1) and with client devices 122 (FIG. 1). The results of the connection monitoring and/or the determined type of problem may be, at least temporarily, stored in memory subsystem 612. In addition, in response to a request received via networking subsystem 614 or after an elapsed time since a previous update to the connection-monitoring results, the diagnostic application may provide information specifying the connection-monitoring results and/or the determined type of problem to one or more of the other electronic devices in FIG. 1. In some embodiments, the connection monitoring performed by electronic device 600 is partial, *e*.*g*., it may only include connections with those electronic devices in system 100 (FIG. 1) that communicate with electronic device 600. In these embodiments, electronic device 600 may receive information specifying connection-monitoring results and/or a determined type of problem (or probable type of problem) from one or more of the other electronic devices in FIG. 1. This received information may be used by the diagnostic application to determine the type of problem. Once the type of problem is determined, networking subsystem 614 may communicate a request for remedial action, *e.g*., to: maintenance personnel, a provider of system 1 00 (FIG. 1) and/or a provider of environmental monitoring devices 110 (FIG. 1). In some embodiments, the determined type of problem (which is either determined by electronic device 600 and/or is received from another electronic device in system 1 00 in FIG. 1) is included in the historical record or log for the environment. As noted previously, this may allow the data quality or integrity of the historical record for the environment to be maintained or verified by determining when a disruption in the monitoring of the one or more environmental conditions is due to an unintentional or an unavoidable act (such as a power failure).

Within electronic device 600, processing subsystem 610, memory subsystem 612, and/or networking subsystem 614 may be coupled using one or more interconnects, such as bus 620. These interconnects may include an electrical, optical, and/or electro-optical connection that the subsystems can use to communicate commands and data among one another. Note that different embodiments can include a different number or configuration of electrical, optical, and/or electro-optical connections among the subsystems.

Electronic device 600 can be (or can be included in) any electronic device with at least one network interface. For example, electronic device 600 can be (or can be included in): a sensor (such as a smart sensor), a tablet computer, a smartphone, a cellular telephone, an appliance, a regulator device, a consumer-electronic device, a portable computing device, test equipment, a digital signal processor, a controller, a personal digital assistant, a facsimile machine, a laser printer (or other office equipment such as a photocopier), a personal organizer, a toy, a set-top box, a computing device (such as a laptop computer, a desktop computer, a server, and/or a subnotebook/netbook), an alarm, a light (such as a nightlight), a monitoring device, and/or another electronic device.

Although specific components are used to describe electronic device 600, in alternative embodiments, different components and/or subsystems may be present in electronic device 600. For example, electronic device 600 may include one or more additional processing subsystems, memory subsystems, and/or networking subsystems. Additionally, one or more of the subsystems may not be present in electronic device 600. Moreover, in some embodiments, electronic device 600 may include one or more additional subsystems that are not shown in FIG. 6, such as a power supply and/or a user-interface subsystem (which a user may use to modify settings of one or more of environmental monitoring devices 110 in FIG. 1, such as settings for alarms or notifications). Although separate subsystems are shown in FIG. 6, in some embodiments, some or all of a given subsystem or component can be integrated into one or more of the other subsystems or components in electronic device 600. For example, in some embodiments the one or more program modules 624 are included in operating system 622.

Moreover, the circuits and components in electronic device 600 may be implemented using any combination of analog and/or digital circuitry, including: bipolar, *PMOS* and/or *NMOS* gates or transistors. Furthermore, signals in these embodiments may include digital signals that have approximately discrete values and/or analog signals that have continuous values. Additionally, components and circuits may be single-ended or differential, and power supplies may be unipolar or bipolar.

Note that an integrated circuit may implement some or all of the functionality of electronic device 600.

While some of the operations in the preceding embodiments were implemented in hardware or software, in general the operations in the preceding embodiments can be implemented in a wide variety of configurations and architectures. Therefore, some or all of the operations in the preceding embodiments may be performed in hardware, in software or both.

In the preceding description, we refer to 'some embodiments.' Note that 'some embodiments' describes a subset of all of the possible embodiments, but does not always specify the same subset of embodiments.

The foregoing description is intended to enable any person skilled in the art to make and use the disclosure, and is provided in the context of a particular application and its requirements. Moreover, the foregoing descriptions of embodiments of the present disclosure have been presented for purposes of illustration and description only. They are not intended to be exhaustive or to limit the present disclosure to the forms disclosed. Accordingly, many modifications and variations will be apparent to practitioners skilled in the art, and the general principles defined herein may be applied to other embodiments and applications without departing from the scope of the present invention as defined by the appended claims.

## Claims

1. A system (100), comprising:
environmental monitoring devices (110) configured to monitor and communicate information about environmental conditions in external environments that include the environmental monitoring devices (110);
a data server (116) configured to: receive the information from the environmental monitoring devices (110); associate the information with user accounts of users of the system; store the information; and interact with a client server (118) via a network (126); and
the client server (118) configured to: receive the information from the environmental monitoring devices (110); interact with the data server (116) and client devices (122) of the users via the network (126); communicate the information to the devices (122); and provide user-account information to the data server (116),
wherein the system (100) is configured to:
monitor (210) communication among the environmental monitoring devices (110), the data server (116), the client server (118) and the client devices (122), wherein the communication among the environmental monitoring devices (110), the data server (116), the client server (118) and the client devices (122) occurs via a network (126) associated with multiple service providers;
detect disruptions in connections that convey information during the communication among the environmental monitoring devices (110), the data server (116), the client server (118) and the client devices (122); and
determine (212) a type of problem in the system (100) based at least in part on the disruptions in the connections, and at least one of: locations of the environmental monitoring devices (110) in the external environments, or locations of the external environments, wherein the locations of the environmental monitoring devices (110) or the locations of the external environments are associated with the user accounts, and wherein there is a relationship between the disruptions in the connections and at least one or more of the locations.

2. The system (100) of claim 1, wherein the system (100) determines the type of problem based at least in part on whether: a connection is disrupted at a location that includes one device in the system (100), a first set of connections are disrupted in a region that includes multiple devices in the system (100), and a second set of connection are disrupted throughout the system (100).

3. The system (100) of claim 1, wherein portions of the network (126) are associated with different service providers;
wherein the type of problem involves disruption of connections among one or more of: the environmental monitoring devices (110) and the data server (116), the environmental monitoring devices (110) and the client server (118), the environmental monitoring devices (110) and the client devices (122), the client devices (122) and the data server (116), and the client devices (122) and the client server (118); and
wherein the system (100) is configured to determine that the type of problem includes a power failure when all the connections are disrupted in a region that includes multiple devices in the system (100).

4. The system (100) of claim 1, wherein portions of the network (126) are associated with different service providers;
wherein the type of problem involves disruption of connections among one or more of: the environmental monitoring devices (110) and the data server (116), the environmental monitoring devices (110) and the client server (118), the environmental monitoring devices (110) and the client devices (122), the client devices (122) and the data server (116), and the client devices (122) and the client server (118); and
wherein the system (100) is configured to determine that the type of problem includes a communication failure associated with one or more of the services providers when a majority of the connections are disrupted in more than one region in the system (100).

5. The system (100) of claim 1, wherein portions of the network (126) are associated with different service providers;
wherein the type of problem involves disruption of connections among one or more of: the environmental monitoring devices (110) and the data server (116), the environmental monitoring devices (110) and the client server (118), the environmental monitoring devices (110) and the client devices (122), the client devices (122) and the data server (116), and the client devices (122) and the client server (118);
wherein the system (100) is configured to determine that the type of problem includes a problem at a location in the system (100) when the disrupted connections are associated with a user; and
wherein the problem at the location includes one of: a power disruption at the location, a network (126)-connection problem at the location, and a router problem at the location.

6. The system (100) of claim 1, wherein portions of the network (126) are associated with different service providers;
wherein the type of problem involves disruption of connections with the environmental monitoring devices (110) at different locations, having a common characteristic, in the system (100);
wherein the common characteristic includes one of: a geographic condition at the locations, a position of the environmental monitoring devices (110) within the locations, and duration of ownership of the environmental monitoring devices (110); and
wherein the system (100) is configured to determine that the type of problem includes a failure mode of the environmental monitoring devices (110).

7. The system (100) of claim 1, wherein portions of the network (126) are associated with different service providers;
wherein the type of problem involves disruption of connections among a client device (122-1) and the environmental monitoring devices (110); and
wherein the system (100) is configured to determine that the type of problem includes a power disruption at a location in the system (100).

8. The system (100) of claim 1, wherein the environmental monitoring devices (110) are configured to communicate the information to a storage subsystem (120);
wherein the storage subsystem (120) is associated with a third party that is other than a provider of the environmental monitoring devices (110), the data server (116) and the client server (118);
wherein the type of problem involves disruption of connections among the environmental monitoring devices (110) and the storage subsystem (120); and
wherein the system (100) is configured to determine that the type of problem includes one of: a failure mode of the environmental monitoring devices (110); the storage subsystem (120) is full; the storage subsystem (120) is suffering a device failure; the storage subsystem (120) is offline; and a network (126)-connection problem with the storage subsystem (120).

9. The system (100) of claim 1, wherein the type of problem involves disruption of a connection between the data server (116) and the client server (118); and
wherein the system (100) is configured to determine that the type of problem includes one of: a problem at a data center that stores the information and a problem with a database.

10. The system (100) of claim 1, wherein the type of problem involves disruption of a connection between the client server (118) and the environmental monitoring devices (110); and
wherein the system (100) is configured to determine that the type of problem includes a problem with the network (126).

11. The system (100) of claim 1, wherein the type of problem involves disruption of a connection between the client server (118) and the client devices (122); and
wherein the system (100) is configured to determine that the type of problem includes one of: a power failure, a problem with the network (126), and a problem with the client server (118).

12. The system (100) of claim 1, wherein the type of problem involves disruption of a connection between a client device (122-1) and the environmental monitoring devices (110); and
wherein the system (100) is configured to determine that the type of problem includes one of: a power failure, and a problem with the network (126).

13. The system (100) of claim 1, wherein the type of problem involves disruption of a connection between the data server (116) and one of the environmental monitoring devices (110); and
wherein the system (100) is configured to determine that the type of problem includes one of: a power failure, corrupted data, and a problem with the network (126).

14. A computer-program product for use in conjunction with a system (100), the computer-program product comprising a non-transitory computer-readable storage medium and a computer-program mechanism embedded therein, wherein, when executed by the system (100), the computer-program mechanism causes the system (100) to:
monitor (210) communication among environmental monitoring devices (110) in the system (100), a data server (116) in the system (100), a client server (118) in the system (100) and client devices (122), wherein the environmental monitoring devices (110) monitor and communicate information about environmental conditions in external environments that include the environmental monitoring devices (110), and wherein the communication among the environmental monitoring devices (110), the data server (116), the client server (118) and the client devices (122) occurs via a network (126) associated with multiple service providers;
detect disruptions in connections that convey information during the communication among the environmental monitoring devices (110), the data server (116), the client server (118) and the client devices (122); and
determine (212) a type of problem in the system (100) based at least in part on the disruptions in the connections, and at least one of: locations of the environmental monitoring devices (110) in the external environments, or locations of the external environments, wherein there is a relationship between the disruptions in the connections and at least one or more of the locations.

15. A method for determining a type of problem in a system (100), wherein the method comprises:
by a one or more processors:
monitoring (210) communication among environmental monitoring devices (110) in the system (100), a data server (116) in the system (100), a client server (118) in the system (100) and client devices (122), wherein the environmental monitoring devices (110) monitor and communicate information about environmental conditions in external environments that include the environmental monitoring devices (110), and wherein the communication among the environmental monitoring devices (110), the data server (116), the client server (118) and the client devices (122) occurs via a network (126) associated with multiple service providers;
detecting disruptions in connections that convey information during the communication among the environmental monitoring devices (110), the data server (116), the client server (118) and the client devices (122); and
determining (212) a type of problem in the system (100) based at least in part on the disruptions in the connections, and at least one of: locations of the environmental monitoring devices (110) in the external environments, or locations of the external environments, wherein there is a relationship between the disruptions in the connections and at least one or more of the locations.

## Patentansprüche

1. System (100), umfassend:
Umgebungsüberwachungsvorrichtungen (110), die konfiguriert sind, um Informationen über Umgebungsbedingungen in externen Umgebungen, die die Umgebungsüberwachungsvorrichtungen (110) beinhalten, zu überwachen und zu kommunizieren;
einen Datenserver (116), der zu Folgendem konfiguriert ist: Empfangen der Informationen von den Umgebungsüberwachungsvorrichtungen (110); Assoziieren der Informationen mit Benutzerkonten von Benutzern des Systems; Speichern der Informationen; und Interagieren mit einem Client-Server (118) über ein Netzwerk (126); und
wobei der Client-Server (118) zu Folgendem konfiguriert ist: Empfangen der Informationen von den Umgebungsüberwachungsvorrichtungen (110); Interagieren mit dem Datenserver (116) und den Client-Vorrichtungen (122) der Benutzer über das Netzwerk (126); Kommunizieren der Informationen an die Vorrichtungen (122); und Bereitstellen von Benutzerkontoinformationen an den Datenserver (116),
wobei das System (100) zu Folgendem konfiguriert ist:
Überwachen (210) einer Kommunikation zwischen den Umgebungsüberwachungsvorrichtungen (110), dem Datenserver (116), dem Client-Server (118) und den Client-Vorrichtungen (122), wobei die Kommunikation zwischen den Umgebungsüberwachungsvorrichtungen (110), dem Datenserver (116), dem Client-Server (118) und den Client-Vorrichtungen (122) über ein Netzwerk (126) erfolgt, das mit vielfachen Dienstanbietern assoziiert ist;
Erkennen von Unterbrechungen in Verbindungen, die während der Kommunikation Informationen zwischen den Umgebungsüberwachungsvorrichtungen (110), dem Datenserver (116), dem Client-Server (118) und den Client-Vorrichtungen (122) übertragen; und
Bestimmen (212) einer Art von Problem in dem System (100), basierend zumindest teilweise auf den Unterbrechungen in den Verbindungen, und mindestens eines von Folgendem: Standorte der Umgebungsüberwachungsvorrichtungen (110) in den externen Umgebungen, oder Standorte der externen Umgebungen, worin die Standorte der Umgebungsüberwachungsvorrichtungen (110) oder die Standorte der externen Umgebungen mit den Benutzerkonten assoziiert sind, und worin eine Beziehung zwischen den Unterbrechungen in den Verbindungen und mindestens einem oder mehreren der Standorte besteht.

2. System (100) nach Anspruch 1, wobei das System (100) die Art des Problems zumindest teilweise basierend darauf bestimmt, ob: eine Verbindung an einem Standort unterbrochen ist, die eine Vorrichtung in dem System (100) beinhaltet, ein erster Satz von Verbindungen in einer Region unterbrochen ist, der mehrere Vorrichtungen in dem System (100) beinhaltet, und ein zweiter Satz von Verbindungen im gesamten System (100) unterbrochen ist.

3. System (100) nach Anspruch 1, wobei Teile des Netzwerks (126) mit verschiedenen Dienstanbietern assoziiert sind;
wobei die Art des Problems eine Unterbrechung von Verbindungen zwischen einem oder mehreren der folgenden involviert: den Umgebungsüberwachungsvorrichtungen (110) und dem Datenserver (116), den Umgebungsüberwachungsvorrichtungen (110) und dem Client-Server (118), den Umgebungsüberwachungsvorrichtungen (110) und den Client-Vorrichtungen (122), den Client-Vorrichtungen (122) und dem Datenserver (116), sowie den Client-Vorrichtungen (122) und dem Client-Server (118); und
wobei das System (100) konfiguriert ist, um zu bestimmen, dass die Art des Problems einen Stromausfall beinhaltet, wenn alle Verbindungen in einer Region unterbrochen sind, die vielfache Vorrichtungen in dem System (100) beinhaltet.

4. System (100) nach Anspruch 1, wobei Teile des Netzwerks (126) mit verschiedenen Dienstanbietern assoziiert sind;
wobei die Art des Problems eine Unterbrechung von Verbindungen zwischen einem oder mehreren der folgenden involviert: den Umgebungsüberwachungsvorrichtungen (110) und dem Datenserver (116), den Umgebungsüberwachungsvorrichtungen (110) und dem Client-Server (118), den Umgebungsüberwachungsvorrichtungen (110) und den Client-Vorrichtungen (122), den Client-Vorrichtungen (122) und dem Datenserver (116), sowie den Client-Vorrichtungen (122) und dem Client-Server (118); und
wobei das System (100) konfiguriert ist, um zu bestimmen, dass die Art des Problems eine Kommunikationsstörung beinhaltet, der mit einem oder mehreren der Dienstanbieter assoziiert ist, wenn eine Mehrheit der Verbindungen in mehr als einer Region des Systems (100) unterbrochen ist.

5. System (100) nach Anspruch 1, wobei Teile des Netzwerks (126) mit verschiedenen Dienstanbietern assoziiert sind;
wobei die Art des Problems eine Unterbrechung der Verbindungen zwischen einem oder mehreren der folgenden involviert: den Umgebungsüberwachungsvorrichtungen (110) und dem Datenserver (116), den Umgebungsüberwachungsvorrichtungen (110) und dem Client-Server (118), den Umgebungsüberwachungsvorrichtungen (110) und den Client-Vorrichtungen (122), den Client-Vorrichtungen (122) und dem Datenserver (116), sowie den Client-Vorrichtungen (122) und dem Client-Server (118);
wobei das System (100) konfiguriert ist, um zu bestimmen, dass die Art des Problems ein Problem an einem Standort in dem System (100) beinhaltet, wenn die unterbrochenen Verbindungen mit einem Benutzer assoziiert sind; und
wobei das Problem an dem Standort eines der folgenden beinhaltet: eine Stromunterbrechung an dem Standort, ein Verbindungsproblem des Netzwerks (126) an dem Standort und ein Routerproblem an dem Standort.

6. System (100) nach Anspruch 1, wobei Teile des Netzwerks (126) mit verschiedenen Dienstanbietern assoziiert sind;
wobei die Art des Problems eine Unterbrechung von Verbindungen mit den Umgebungsüberwachungsvorrichtungen (110) an verschiedenen Standorten, die ein gemeinsames Merkmal aufweisen, in dem System (100) involviert;
wobei das gemeinsame Merkmal eines der folgenden beinhaltet: eine geografische Bedingung an den Standorten, eine Position der Umgebungsüberwachungsvorrichtungen (110) innerhalb der Standorte und Dauer der Inhaberschaft der Umgebungsüberwachungsvorrichtungen (110); und
wobei das System (100) konfiguriert ist, um zu bestimmen, dass die Art des Problems einen Störungsmodus der Umgebungsüberwachungsvorrichtungen (110) beinhaltet.

7. System (100) nach Anspruch 1, wobei Teile des Netzwerks (126) mit verschiedenen Dienstanbietern assoziiert sind;
wobei die Art des Problems eine Unterbrechung von Verbindungen zwischen einer Client-Vorrichtung (122-1) und den Umgebungsüberwachungsvorrichtungen (110) beinhaltet; und
wobei das System (100) konfiguriert ist, um zu bestimmen, dass die Art des Problems eine Stromunterbrechung an einem Standort in dem System (100) beinhaltet.

8. System (100) nach Anspruch 1, wobei die Umgebungsüberwachungsvorrichtungen (110) konfiguriert sind, um die Informationen an ein Speichersubsystem (120) zu kommunizieren;
wobei das Speichersubsystem (120) mit einem anderen Dritten als einem Anbieter der Umgebungsüberwachungsvorrichtungen (110), des Datenservers (116) und des Client-Servers (118) assoziiert ist;
wobei die Art des Problems eine Unterbrechung von Verbindungen zwischen den Umgebungsüberwachungsvorrichtungen (110) und dem Speichersubsystem (120) involviert; und
wobei das System (100) konfiguriert ist, um zu bestimmen, dass die Art des Problems eines der folgenden beinhaltet: einen Störungsmodus der Umgebungsüberwachungsvorrichtungen (110); das Speichersubsystem (120) ist voll; das Speichersubsystem (120) erleidet eine Vorrichtungsstörung; das Speichersubsystem (120) ist offline; und ein Verbindungsproblem des Netzwerks (126) mit dem Speichersubsystem (120).

9. System (100) nach Anspruch 1, wobei die Art des Problems eine Unterbrechung einer Verbindung zwischen dem Datenserver (116) und dem Client-Server (118) involviert; und
wobei das System (100) konfiguriert ist, um zu bestimmen, dass die Art des Problems eines von Folgenden beinhaltet: ein Problem in einem Rechenzentrum, das die Informationen speichert, und einem Problem mit einer Datenbank.

10. System (100) nach Anspruch 1, wobei die Art des Problems eine Unterbrechung einer Verbindung zwischen dem Client-Server (118) und den Umgebungsüberwachungsvorrichtungen (110) involviert; und
wobei das System (100) konfiguriert ist, um zu bestimmen, dass die Art des Problems ein Problem mit dem Netzwerk (126) beinhaltet.

11. System (100) nach Anspruch 1, wobei die Art des Problems eine Unterbrechung einer Verbindung zwischen dem Client-Server (118) und den Client-Vorrichtungen (122) beinhaltet; und
wobei das System (100) konfiguriert ist, um zu bestimmen, dass die Art des Problems eines von Folgenden beinhaltet: einen Stromausfall, ein Problem mit dem Netzwerk (126) und ein Problem mit dem Client-Server (118).

12. System (100) nach Anspruch 1, wobei die Art des Problems eine Unterbrechung einer Verbindung zwischen einer Client-Vorrichtung (122-1) und den Umgebungsüberwachungsvorrichtungen (110) involviert; und
wobei das System (100) konfiguriert ist, um zu bestimmen, dass die Art des Problems eines von Folgenden beinhaltet: einen Stromausfall und ein Problem mit dem Netzwerk (126).

13. System (100) nach Anspruch 1, wobei die Art des Problems eine Unterbrechung einer Verbindung zwischen dem Datenserver (116) und einer der Umgebungsüberwachungsvorrichtungen (110) involviert; und
wobei das System (100) konfiguriert ist, um zu bestimmen, dass die Art des Problems eines von Folgenden beinhaltet: einen Stromausfall, beschädigte Daten und ein Problem mit dem Netzwerk (126).

14. Computerprogrammprodukt zur Verwendung in Verbindung mit einem System (100), wobei das Computerprogrammprodukt ein nicht-flüchtiges, computerlesbares Speichermedium und einen darin eingebetteten Computerprogrammmechanismus umfasst, wobei der Computerprogrammmechanismus, wenn er durch das System (100) ausgeführt wird, das System (100) zu Folgendem veranlasst:
Überwachen (210) einer Kommunikation zwischen Umgebungsüberwachungsvorrichtungen (110) in dem System (100), einem Datenserver (116) in dem System (100), einem Client-Server (118) in dem System (100) und Client-Vorrichtungen (122), wobei die Umgebungsüberwachungsvorrichtungen (110) Informationen über Umgebungsbedingungen in externen Umgebungen, die die Umgebungsüberwachungsvorrichtungen (110) beinhalten, überwachen und kommunizieren, und wobei die Kommunikation zwischen den Umgebungsüberwachungsvorrichtungen (110), dem Datenserver (116), dem Client-Server (118) und den Client-Vorrichtungen (122) über ein Netzwerk (126) erfolgt, das mit vielfachen Dienstanbietern assoziiert ist;
Erkennen von Unterbrechungen in Verbindungen, die während der Kommunikation Informationen zwischen den Umgebungsüberwachungsvorrichtungen (110), dem Datenserver (116), dem Client-Server (118) und den Client-Vorrichtungen (122) übertragen; und
Bestimmen (212) einer Art von Problem im System (100), basierend zumindest teilweise auf den Unterbrechungen in den Verbindungen, und mindestens eines von Folgendem: Standorte der Umweltüberwachungsvorrichtungen (110) in den externen Umgebungen, oder Standorte der externen Umgebungen, worin eine Beziehung zwischen den Unterbrechungen in den Verbindungen und mindestens einem oder mehreren der Standorte besteht.

15. Verfahren zum Bestimmen einer Art von Problem in einem System (100), wobei das Verfahren Folgendes umfasst:
durch einen oder mehrere Prozessoren:
Überwachen (210) einer Kommunikation zwischen Umgebungsüberwachungsvorrichtungen (110) in dem System (100), einem Datenserver (116) in dem System (100), einem Client-Server (118) in dem System (100) und Client-Vorrichtungen (122), wobei die Umgebungsüberwachungsvorrichtungen (110) Informationen über Umgebungsbedingungen in externen Umgebungen, die die Umgebungsüberwachungsvorrichtungen (110) beinhalten, überwachen und kommunizieren, und wobei die Kommunikation zwischen den Umgebungsüberwachungsvorrichtungen (110), dem Datenserver (116), dem Client-Server (118) und den Client-Vorrichtungen (122) über ein Netzwerk (126) erfolgt, das mit vielfachen Dienstanbietern assoziiert ist; Erkennen von Unterbrechungen in Verbindungen, die während der Kommunikation Informationen zwischen den Umgebungsüberwachungsvorrichtungen (110), dem Datenserver (116), dem Client-Server (118) und den Client-Vorrichtungen (122) übertragen; und
Bestimmen (212) einer Art von Problem im System (100), basierend zumindest teilweise auf den Unterbrechungen in den Verbindungen, und mindestens eines von Folgendem: Standorte der Umweltüberwachungsvorrichtungen (110) in den externen Umgebungen, oder Standorte der externen Umgebungen, worin eine Beziehung zwischen den Unterbrechungen in den Verbindungen und mindestens einem oder mehreren der Standorte besteht.

## Revendications

1. Système (100), comprenant :
des dispositifs de surveillance environnementale (110) conçus pour surveiller et communiquer des informations sur des conditions environnementales dans des environnements externes qui comprennent les dispositifs de surveillance environnementale (110) ;
un serveur de données (116) conçu pour : recevoir les informations depuis les dispositifs de surveillance environnementale (110) ; associer les informations avec des comptes utilisateur d'utilisateurs du système ; stocker les informations et interagir avec un serveur client (118) par le biais d'un réseau (126) ; et
le serveur client (118) conçu pour : recevoir les informations depuis les dispositifs de surveillance environnementale (110) ; interagir avec le serveur de données (116) et les dispositifs client (122) des utilisateurs par le biais du réseau (126) ; communiquer les informations aux dispositifs (122) et fournir des informations de compte utilisateur au serveur de données (116),
dans lequel le système (100) est conçu pour :
surveiller (210) la communication entre les dispositifs de surveillance environnementale (110), le serveur de données (116), le serveur client (118) et les dispositifs client (122), la communication entre les dispositifs de surveillance environnementale (110), le serveur de données (116), le serveur client (118) et les dispositifs client (122) ayant lieu par le biais d'un réseau (126) associé à de multiples fournisseurs de services ;
détecter des interruptions de connexions qui acheminent des informations pendant la communication entre les dispositifs de surveillance environnementale (110), le serveur de données (116), le serveur client (118) et les dispositifs client (122) ; et
déterminer (212) un type de problème dans le système (100) en fonction au moins en partie des interruptions des connexions, et : des emplacements des dispositifs de surveillance environnementale (110) dans les environnements externes et/ou des emplacements des environnements externes, les emplacements des dispositifs de surveillance environnementale (110) ou les emplacements des environnements externes étant associés aux comptes utilisateur, et une relation existant entre les interruptions des connexions et au moins un ou plusieurs des emplacements.

2. Système (100) selon la revendication 1, le système (100) déterminant le type de problème selon si au moins en partie : une connexion est interrompue à un emplacement qui comprend un dispositif dans le système (100), un premier ensemble de connexions sont interrompues dans une région qui comprend de multiples dispositifs dans le système (100), et un deuxième ensemble de connexions sont interrompues dans tout le système (100).

3. Système (100) selon la revendication 1, dans lequel des parties du réseau (126) sont associées à différents fournisseurs de services ;
dans lequel le type de problème implique l'interruption de connexions entre : les dispositifs de surveillance environnementale (110) et le serveur de données (116), les dispositifs de surveillance environnementale (110) et le serveur client (118), les dispositifs de surveillance environnementale (110) et les dispositifs client (122), les dispositifs client (122) et le serveur de données (116) et/ou les dispositifs client (122) et le serveur client (118); et
le système (100) étant conçu pour déterminer que le type de problème comprend une panne d'électricité lorsque toutes les connexions sont interrompues dans une région qui comprend de multiples dispositifs dans le système (100).

4. Système (100) selon la revendication 1, dans lequel des parties du réseau (126) sont associées à différents fournisseurs de services ;
dans lequel le type de problème implique l'interruption de connexions entre : les dispositifs de surveillance environnementale (110) et le serveur de données (116), les dispositifs de surveillance environnementale (110) et le serveur client (118), les dispositifs de surveillance environnementale (110) et les dispositifs client (122), les dispositifs client (122) et le serveur de données (116) et/ou les dispositifs client (122) et le serveur client (118); et
le système (100) étant conçu pour déterminer que le type de problème comprend un échec de communication associé à au moins un des fournisseurs de services lorsqu'une majorité de connexions sont interrompues dans plus d'une région dans le système (100).

5. Système (100) selon la revendication 1, dans lequel des parties du réseau (126) sont associées à différents fournisseurs de services ;
dans lequel le type de problème implique l'interruption de connexions entre : les dispositifs de surveillance environnementale (110) et le serveur de données (116), les dispositifs de surveillance environnementale (110) et le serveur client (118), les dispositifs de surveillance environnementale (110) et les dispositifs client (122), les dispositifs client (122) et le serveur de données (116) et/ou les dispositifs client (122) et le serveur client (118) ;
le système (100) étant conçu pour déterminer que le type de problème comprend un problème à un emplacement dans le système (100) lorsque les connexions interrompues sont associées à un utilisateur ; et
le problème à l'emplacement comprenant : une interruption d'alimentation à l'emplacement, un problème de connexion de réseau (126) à l'emplacement ou un problème de routeur à l'emplacement.

6. Système (100) selon la revendication 1, dans lequel des parties du réseau (126) sont associées à différents fournisseurs de services ;
dans lequel le type de problème implique une interruption de connexions avec les dispositifs de surveillance environnementale (110) à différents emplacements, présentant une caractéristique commune, dans le système (100) ;
la caractéristique commune comprenant : une condition géographique aux emplacements, une position des dispositifs de surveillance environnementale (110) dans les emplacements et une durée de propriété des dispositifs de surveillance environnementale (110) ; et
le système (100) étant conçu pour déterminer que le type de problème comprend un mode d'échec des dispositifs de surveillance environnementale (110).

7. Système (100) selon la revendication 1, dans lequel des parties du réseau (126) sont associées à différents fournisseurs de services ;
dans lequel le type de problème implique l'interruption de connexions entre un dispositif client (122-1) et les dispositifs de surveillance environnementale (110) ; et
le système (100) étant conçu pour déterminer que le type de problème comprend une interruption d'alimentation à un emplacement dans le système (100).

8. Système (100) selon la revendication 1, dans lequel les dispositifs de surveillance environnementale (110) sont conçus pour communiquer les informations au sous-système de stockage (120) ;
dans lequel le sous-système de stockage (120) est associé à un tiers qui est autre qu'un fournisseur des dispositifs de surveillance environnementale (110), le serveur de données (116) et le serveur client (118) ;
dans lequel le type de problème implique l'interruption de connexions entre les dispositifs de surveillance environnementale (110) et le sous-système de stockage (120) ; et
dans lequel le système (100) est conçu pour déterminer que le type de problème comprend un des éléments suivants : un mode d'échec des dispositifs de surveillance environnementale (110) ; le sous-système de stockage (120) est plein ; le sous-système de stockage (120) présente une défaillance de dispositif ; le sous-système de stockage (120) est déconnecté ou un problème de connexion de réseau (126) avec le sous-système de stockage (120).

9. Système (100) selon la revendication 1, dans lequel le type de problème implique l'interruption d'une connexion entre le serveur de données (116) et le serveur client (118) ; et
le système (100) étant conçu pour déterminer que le type de problème comprend un des éléments suivants : un problème dans un centre de données qui stocke les informations ou un problème avec une base de données.

10. Système (100) selon la revendication 1, dans lequel le type de problème implique l'interruption d'une connexion entre le serveur client (118) et les dispositifs de surveillance environnementale (110) ; et
le système (100) étant conçu pour déterminer que le type de problème comprend un problème avec le réseau (126).

11. Système (100) selon la revendication 1, dans lequel le type de problème implique l'interruption d'une connexion entre le serveur client (118) et les dispositifs client (122) ; et
le système (100) étant conçu pour déterminer que le type de problème comprend un des éléments suivants : une panne d'électricité, un problème avec le réseau (126) ou un problème avec le serveur client (118).

12. Système (100) selon la revendication 1, dans lequel le type de problème implique l'interruption d'une connexion entre le dispositif client (122-1) et les dispositifs de surveillance environnementale (110) ; et
le système (100) étant conçu pour déterminer que le type de problème comprend : une panne d'électricité ou un problème avec le réseau (126).

13. Système (100) selon la revendication 1, dans lequel le type de problème implique l'interruption d'une connexion entre le serveur de données (116) et un des dispositifs de surveillance environnementale (110) ; et
le système (100) étant conçu pour déterminer que le type de problème comprend un des éléments suivants : une panne d'électricité, des données corrompues ou un problème avec le réseau (126).

14. Produit de programme informatique destiné à une utilisation en association avec un système (100), le produit de programme informatique comprenant un support de stockage non transitoire lisible par ordinateur et un mécanisme de programme informatique incorporé à l'intérieur de celui-ci, dans lequel, lorsqu'exécuté par le système (100), le mécanisme de programme informatique amène le système (100) à :
surveiller (210) une communication entre des dispositifs de surveillance environnementale (110) dans le système (100), un serveur de données (116) dans le système (100), un serveur client (118) dans le système (100) et des dispositifs client (122), les dispositifs de surveillance environnementale (110) surveillant et communiquant des informations sur des conditions environnementales dans des environnements externes qui comprennent les dispositifs de surveillance environnementale (110), et la communication entre les dispositifs de surveillance environnementale (110), le serveur de données (116), le serveur client (118) et les dispositifs client (122) ayant lieu par le biais d'un réseau (126) associé à de multiples fournisseurs de services ;
détecter des interruptions des connexions qui acheminent des informations pendant la communication entre les dispositifs de surveillance environnementale (110), le serveur de données (116), le serveur client (118) et les dispositifs client (122) ; et
déterminer (212) un type de problème dans le système (100) en fonction au moins en partie des interruptions des connexions, et : des emplacements des dispositifs de surveillance environnementale (110) dans les environnements externes et/ou des emplacements des environnements externes, une relation existant entre les interruptions des connexions et au moins un ou plusieurs des emplacements.

15. Procédé de détermination d'un type de problème dans un système (100), le procédé comprenant :
par au moins un processeur :
la surveillance (210) d'une communication entre des dispositifs de surveillance environnementale (110) dans le système (100), un serveur de données (116) dans le système (100), un serveur client (118) dans le système (100) et des dispositifs client (122), les dispositifs de surveillance environnementale (110) surveillant et communiquant des informations sur des conditions environnementales dans des environnements externes qui comprennent les dispositifs de surveillance environnementale (110), et la communication entre les dispositifs de surveillance environnementale (110), le serveur de données (116), le serveur client (118) et les dispositifs client (122) ayant lieu par le biais d'un réseau (126) associé à de multiples fournisseurs de services ;
la détection d'interruptions de connexions qui acheminent des informations pendant la communication entre les dispositifs de surveillance environnementale (110), le serveur de données (116), le serveur client (118) et les dispositifs client (122) ; et
la détermination (212) d'un type de problème dans le système (100) en fonction au moins en partie des interruptions des connexions, et : des emplacements des dispositifs de surveillance environnementale (110) dans les environnements externes et/ou des emplacements des environnements externes, une relation existant entre les interruptions des connexions et au moins un ou plusieurs des emplacements.
